# EUROPÄISCHE PATENTSCHRIFT

(11) **EP 4 573 651 B1**
(45) Veröffentlichungstag und Bekanntmachung des Hinweises auf die Patenterteilung: **10.06.2026**
(21) Anmeldenummer: 23748498.5
(22) Anmeldetag: 26.07.2023
(51) Int. Cl.: H02S 20/23, H02S 20/10, H02S 30/20, A01G 13/21, E04D 11/00

(54) **VORRICHTUNG ZUR ÜBERDACHUNG**
DEVICE FOR FORMING A CANOPY
DISPOSITIF DE RECOUVREMENT

(30) Priorität: 18.08.2022 DE 102022120881; 05.04.2023 DE 102023108768
(43) Veröffentlichungstag der Anmeldung: 25.06.2025
(73) Patentinhaber: VOEN VÖHRINGER GMBH & Co. KG, 88273 Fronreute-Blitzenreute (DE)
(72) Erfinder: VÖHRINGER, Reinhard, 88276 Berg (DE)
(74) Vertreter: RavensPAT Patentanwälte Partnerschaft mbB
(86) Internationale Anmeldenummer: PCT/EP2023/070677
(87) Internationale Veröffentlichungsnummer: WO 2024/037844

(56) Entgegenhaltungen:
- EP-A1- 3 248 455
- WO-A1-2013/162376
- WO-A1-2021/075640
- WO-A1-2021/146787
- WO-A2-2013/056285
- CN-A- 105 552 151
- CN-A- 107 711 190
- CN-U- 203 129 693
- DE-A1- 102012 016 671
- DE-A1- 102013 006 530
- JP-A- 2004 036 098
- US-A1- 2010 089 433
- US-A1- 2011 005 560
- US-A1- 2013 032 186

## Beschreibung

### Stand der Technik

Auf wirtschaftlich genutzten Flächen wie Anbauflächen für Nutz- oder Kulturpflanzen oder anderweitigen Arealen im Freien kommen regelmäßig Überdachungssysteme zum Beispiel in Leichtbauweise zum Einsatz, um oberhalb des zu schützenden Bereichs ein Schutzdach bereitzustellen.

Die damit bereitstellbare insbesondere um- und abbaubare Überdachung dient zum Beispiel zum Schutz von landwirtschaftlichen Bereichen vor Witterungsbedingungen, Vögeln oder Insekten bzw. zum Schutz der Kulturen vor wetterbedingten Schäden wie Frost-, Hagel-, Regenschäden und/oder zum Schutz vor bakteriellen oder pilzbedingten Pflanzenkrankheiten.

Außerdem stellt in diesem Zusammenhang der Klimawandel eine Vielzahl von Unternehmen im Landwirtschaftssektor vor wachsende Probleme.

Hierbei spielen auch globale Entwicklungen im Hinblick auf eine effiziente und ökologisch vorteilhafte Energiebereitstellung eine immer größere Rolle.

Zum Stand der Technik sind die JP 2004036098 A, CN 203129693 U, US 2013/032186 A1, CN 105552151 A, WO 2013/162376 A1, WO 2021/146787 A1 und WO 2013/056285 A2 genannt.

### Aufgabe und Vorteile der Erfindung

Aufgabe der vorliegenden Erfindung ist es, eine Vorrichtung zur Überdachung von Bereichen der einleitend beschriebenen Art, wie Überdachungssysteme für die Landwirtschaft, technisch effizient und wirtschaftlich vorteilhaft bereitzustellen. Insbesondere sollen lokale und globale Herausforderungen im Hinblick auf den Klimawandel und ökologische Energiegewinnungs-Strategien abseits von fossilen Energieträgern praxistauglich gelöst werden.

Die vorliegende Erfindung geht aus von einer Vorrichtung zur Überdachung eines Bereichs im Freien, wie Anbauflächen für Kultur- oder Nutzpflanzen oder von anderen wirtschaftlich genutzten Flächen, umfassend ein Flächenelement und eine Stützanordnung mit Stützen, wobei die Stützanordnung an einer Bodenfläche des Bereichs verankerbar ist, und wobei das von der Stützanordnung getragene Flächenelement zur Bildung eines flächigen Schutzdaches oberhalb des Bereichs dient, wobei sich ein Abschnitt des Flächenelements entlang eines Firstbereichs des Schutzdaches erstreckt. Beispielsweise erstreckt sich ein Randabschnitt des Flächenelements entlang des Firstbereichs.

Die voneinander beabstandeten Stützen erstrecken sich in vertikaler Richtung von unten, zum Beispiel von der Bodenfläche, bis in den Firstbereich der Vorrichtung. Im Firstbereich ist ein quer zur Vertikalen langgestrecktes Firstelement der Stützanordnung vertikal zur Bodenfläche versetzt im Firstbereich vorhanden. Zum Beispiel ist das Firstelement zwischen beabstandeten oberen Enden der Stützen verlaufend an den oberen Enden aufgenommen.

Beispielsweise dient das Schutzdach zur Überdachung von Kulturpflanzen wie Nutz-, Obst-, Gemüse-, Futterpflanzen oder von Pflanzen als Energie-Rohstoff. Beispielsweise ist das Schutzdach ein Foliendach. Beispielsweise weist das Schutzdach in seiner Fläche keine starren Streben oder Profile auf. Beispielsweise ist das Schutzdach durch randseitig angreifende Zugkräfte räumlich verspannt und/oder aufgespannt.

Die vertikale Richtung ist insbes. eine Höhenrichtung der Vorrichtung. Das Firstelement, wie beispielsweise ein Draht, ein Drahtseil, ein Kunststoff-Seil, und/oder ein stabförmiges längliches Profil, verläuft zumindest angenähert in horizontaler Richtung und kann Kräfte in Längs- und/oder Querrichtung des Firstelements aufnehmen. Beispielsweise ist das Firstelement straff gespannt vorhanden. Beispielsweise ist das Schutzdach oberhalb bzw. über dem Bereich bzw. dem Schutz- oder Nutzbereich im Freien ausgebreitet und gespannt.

Beispielsweise erstreckt sich eine Seite des Flächenelements mit z. B. einem geraden Längs- oder Querrand des Flächenelements entlang des Firstelements. Beispielsweise bildet die betreffende Seite einen oberen firstseitigen Rand einer Seite eines über die Länge des Firstelements sich erstreckenden Bereichs des Flächenelements bzw. Schutzdaches. In der Regel sind am Firstelement lateral beidseitig über die Länge des Firstelements jeweils Teilbereiche des Flächenelements bzw. des Schutzdaches vorhanden, zum Beispiel zur Horizontalen jeweils geneigt nach unten. Beispielsweise weist das Schutzdach bezogen auf ein Firstelement die Form eines gleichseitigen Satteldaches auf. Beispielsweise ist ein Grundriss des Flächenelements bzw. des Schutzdaches viereck-förmig wie z. B. rechteck-förmig.

Beispielsweise ist das Flächenelement einschichtig oder mehrschichtig bzw. mehrlagig. Zum Beispiel ist das Flächenelement aus genau zwei Lagen oder Schichten, einer oberseitigen und einer unterseitigen Lage bzw. Schicht, gebildet. Beispielsweise ist das Flächene_ement aus genau drei Lagen gebildet. Die Lagen sind z. B. schichtartig z. B. aufeinanderliegend gebildet.

Beispielseise umfasst das Flächenelement eine Folie wie eine Kunststoff-Folie. Beispielseise umfasst das Flächenelement genau eine zusammenhängende Folie. Beispielseise umfasst das Flächenelement ein Netzelement wie z. B. ein Netzgewebe. Beispielseise umfasst das Flächenelement genau ein zusammenhängendes Netzelement wie ein Netzgewebe. Beispielsweise ist auf genau einem unteren Netzelement genau eine Folienschicht oberhalb des Netzelements vorhanden. Zum Beispiel weist die Folie mehrere parallele Folienstreifen auf. Zum Beispiel ist das Netzelement durchgängig bzw. einteilig ausgebildet.

Zum Beispiel sind die mehreren Schichten oder die mehreren Lagen des Flächenelements jeweils als ein dünnes flächiges geschlossenes oder perforiertes Material gestaltet. Beispielsweise umfasst das Flächenelement eine Folie, ein Netzelement, ein Textilmaterial oder ein Vlies. Das Flächenelement ist flexibel bzw. verformbar, zum Beispiel auf- und abrollbar. Beispielsweise ist die Folie transparent oder teiltransparent. Zum Beispiel weist die Folie eine Dicke zwischen 0,1 Millimeter und 3 Millimeter auf.

Beispielsweise umfasst das Flächenelement genau ein untenliegendes Netzelement bzw. genau ein Netz wie ein Hagel- oder Insekten-Schutznetz. Beispielsweise umfasst das Flächenelement eine Schicht oberhalb des Netzelements. Beispielsweise umfasst das Flächenelement genau ein untenliegendes Netzelement, z.B. durchgehend flächig bzw. einteilig bzw. einstückig und eine darüber z. B. aufliegend vorhandene Folie. Zum Beispiel bildet die Folie genau eine Schicht oberhalb des Netzelements, ggf. nur randseitig geringfügig überlappend zu einen benachbarten Folienstreifen. Zum Beispiel ist die Folie mehrteilig, zum Beispiel aus mehreren parallelen Folienstreifen gebildet. Zum Beispiel sind die mehreren Folienstreifen rechteckförmig im Grundriss und nebeneinander vorhanden, die sich nicht oder nur randseitig überlappen. Zum Beispiel ist die Folie alternativ einstückig zusammenhängend z. B. über das gesamte Schutzdach gebildet. Zum Beispiel ist die Folie einteilig z. B. über eine gesamte halbe Fläche eines satteldachförmigen Schutzdaches gebildet oder über eine Hälfte bzw. eine Neigungsseite des satteldachförmigen Schutzdaches.

Beispielsweise umfasst das Flächenelement genau eine Lage aus einem Material oder zwei oder mehr Lagen oder Schichten von Materialien, und umfasst z. B. mehrere obere parallele rechteckige Folienstreifen, zum Beispiel randseitig geringfügig überlappend, und darunter ein Träger wie z. B. ein Netz zum Beispiel ein Hagel- oder Insekten-Schutznetz.

Beispielsweise entlang eines Längsrandes eines Folienstreifens ist dieser fixiert an dem Träger darunter, wie z. B. einem Netzträger. Beispielsweise ist ein zum fixierten Längsrand, gegenüberliegender Längsrand des Folienstreifens frei beweglich zum Beispiel durch Wind bzw. Thermik reversibel auslenkbar nach oben.

Erfindungsgemäß ist die Vorrichtung ein Landwirtschafts-Überdachungssystem wie z. B. ein Kulturpflanzen- bzw. Obst- und/oder Gemüse-Überdachungssystem.

Ein Aspekt der Erfindung liegt darin, dass ein Solarzellen-Modul vorgesehen ist, das mit dem Flächenelement verbunden ist, so dass bei Lichteinstrahlung auf das Solarzellen-Modul Lichtenergie in elektrische Energie umwandelbar ist, wobei Schnellverschlussmittel umfassend Reißverschlussmittel mit einer Reißverschluss-Einheit vorgesehen sind, um mit den Reißverschlussmitteln ein Solarzellen-Modul an dem Flächenelement lösbar anzuordnen.

Damit lassen sich verschieden Vorteile für den Praxisalltag erreichen.

Reißverschlussmittel sind von jeder Person intuitiv und manuell ohne weiteres bedienbar, da Reißverschlussmittel zu Gegenständen des täglichen Gebrauchs gehören.

Eine mit dem Solarzellen-Modul bereitgestellte Möglichkeit der ökologischen Energiegewinnung wird mit dem angebrachten Solarzellen-Modul integral im Überdachungssystem implementiert, beispielsweise in einem ansonsten üblich gestalteten Überdachungssystem. Zum Beispiel kann das Solarzellen-Modul an einer üblich gestalteten Vorrichtung zur Überdachung integriert werden. Bestehende und bekannte Vorrichtungen zur Überdachung können mit geringem Aufwand und/oder ohne wesentliche Änderungsmaßnahmen zur Energienutzung durch Photovoltaik verwendet werden. Es sind lediglich die Reißverschlussmittel zu implementieren. Beispielsweise ist die Stützanordnung von bekannten Überdachungssystemen bzw. Vorrichtungen in der bestehenden Konfiguration bzw. identisch nutzbar und ein vorhandenes Flächenelement zur Anordnung des Solarzellen-Moduls verwendbar.

Beispielsweise ist das Solarzellen-Modul ein dünnes, flächiges Bauteil.

Das Solarzellen-Modul kann bei sämtlichen Vorrichtungen angebracht werden, die z. B. zum landwirtschaftlichen Kulturschutz genutzt werden, egal welcher Bereich oder Kultur konkret überdacht ist. Das Solarzellen-Modul kann unabhängig von der konkret verbauten Art des Flächenelements, wie Folien-, Hagel- und/oder Insektenschutz-Flächenelementen variabel bzw. universell zum Einsatz kommen, konkret mit Reißverschlussmitteln lösbar integriert werden.

Beispielsweise kann das Solarzellen-Modul wahlweise schnell und unkompliziert in der Überdachungsvorrichtung angebracht bzw. eingebaut werden. Beispielsweise kann das Solarzellen-Modul bei Nichtnutzung oder aus anderen Gründen von der Überdachung abgenommen und/oder ausgetauscht werden, z. B. zu Reparaturzwecken, und/oder an einer anderen Überdachungsvorrichtung angebracht oder z. B. verstaut werden.

Mit dem Solarzellen-Modul als Teil der Überdachung ist außerdem eine ganzjährige Nutzung des Solarzellen-Moduls verbunden. Zum Beispiel sogar in einer Doppelfunktion, z. B. wenn das Solarzellen-Modul als Schutzmantel für einen darunter komprimiert gehaltenen Bereich des Flächenelements dient, zusätzlich zur Funktion einer ganzjährigen Produktion von elektrischer Energie. Beispielsweise kann aufgrund des Solarzellen-Moduls dann auch eine ansonsten bzw. bisher notwendige Überwinterung und Lagerung des Flächenelements an einem anderen Ort, was aufwändig ist, entfallen.

Beispielsweise ist das Solarzel_en-Modul unmittelbar angrenzend an eine Oberseite eines Abschnitts des Flächenelements aufliegend vorhanden. Beispielsweise ist das Solarzellen-Modul ausschließlich über die Reißverschlussmittel bzw. allein über die Reißverschlussmittel an dem Flächenelement lösbar angeordnet.

Beispielsweise ist die Oberseite des Abschnitts des Flächenelements z. B. flächig in einer Eben ausgebildet. Beispielsweise ist das Solarzel_en-Modul in aller Regel flächig und eben ausgerichtet vorhanden an der Vorrichtung im Energie-Erzeugungszustand. Beispielsweise sind unabhängig vom Solarzellen-Modul, das z. B. flächig gespannt vorhanden ist, restliche Abschnitte des Schutzdaches ebenfalls gespannt vorhanden.

Beispielsweise ist die Oberseite des Abschnitts des Flächenelements und damit das darauf lösbar verbunden vorhandene Solarzellen-Modul nach außen zur Atmosphäre und damit zur Sonne hin ausgerichtet. Die räumliche Ausrichtung des angebrachten Solarzellen-Moduls wie z. B. die Neigung zur Horizontalen ist vorteilhaft an eine optimale Leistung der Solarzelle angepasst auf die Sonnenlichteinstrahlung. Das Solarzellen-Modul ist außen über einem Bereich des Flächenelements und dieses abdeckend vorhanden. Beispielsweise ist das Solarzellen-Modul im aufgespannten Zustand gemäß der flächigen Erstreckung bzw. einer gebildeten Ebene integrierbar an dem Flächenelement. Beispielsweise ist die vom Solarzellen-Modul gebildet Ebene z. B. parallel zu einer vom flächig ausgebreiteten Flächenelement aufgespannten Ebene. Beispielsweise bildet das Solarzellen-Modul und der darunterliegende Flächenelement-Abschnitt ein Mehrschichtaufbau wie beispielsweise ein Zwei- oder Drei- oder Vier-Schichtaufbau.

Zum Beispiel bildet bei dem Schutzdach das Solarzellen-Modul einen Teilflächenbereich des Flächenelements bzw. einen ober- bzw. außenseitigen Teilbereich des Schutzdaches. Beispielsweise ist das Solarzellen-Modul streifenförmig als eine zusammenhängende Funktionseinheit zur Energieumwandlung. Die Länge des Solarzellen-Modul ist beispielsweise gleich oder nahezu entsprechend einer Länge der zusammenhängenden Einheit des Flächenelements bzw. des betreffenden Abschnitts des Flächenelements. Zum Beispiel ist die Länge des Solarzellen-Modul entsprechend einer Teil-Länge der zusammenhängenden Einheit des Flächenelements bzw. des betreffenden Abschnitts des Flächenelements.

Beispielsweise weist eine Reißverschluss-Einheit einen Schieber und zwei längliche miteinander lösbar verhakbare Seitenteile auf.

Zum Beispiel sind die Reißverschlussmittel als Verbindungsmittel ausgestaltet, die nach dem Prinzip eines Reißverschlusses funktionieren. Beispielsweise sind als Reißverschlussmittel auch Zipp-Verschlussmittel mit einer Zippverschluss-Einheit zu verstehen. Die Reißverschlussmittel sind als ein bewährtes, robustes Standardprodukt erhältlich in verschiedensten Konfigurationen. Die Reißverschlussmittel stellen ein einfach zu öffnendes Verschlussmittel dar, das auf Formschluss beruht. Beispielsweise erstreckt sich eine Längsachse der Reißverschluss-Einheit in Längsrichtung des Firstelements, zum Beispiel horizontal und/oder parallel zur Längsachse des Firstelements.

Beispielsweise erstreckt sich eine Längsachse der Reißverschluss-Einheit in vertikaler Richtung und/oder quer zur Längsrichtung des Firstelements. Beispielsweise weist ein Solarzellen-Modul genau eine Reißverschluss-Einheit oder genau zwei Reißverschluss-Einheiten oder mehr als zwei Reißverschluss-Einheiten auf. Beispielsweise weist ein Solarzellen-Modul eine erste Reißverschluss-Einheit auf und eine zweite Reißverschluss-Einheit. Beispielsweise ist die Längsachse der ersten Reißverschluss-Einheit parallel zur Längsachse der zweiten Reißverschluss-Einheit ausgerichtet. Beispielsweise ist die Längsachse der ersten Reißverschluss-Einheit nicht parallel z. B. quer zur Längsachse der zweiten Reißverschluss-Einheit ausgerichtet. Beispielsweise sind bei einem im Grundriss viereckigen Solarzellen-Modul zwei beabstandete und parallel versetzte Reißverschluss-Einheiten vorhanden, deren Längsachsen parallel sind.

Beispielsweise sind bei einem im Grundriss viereckigen Solarzellen-Modul zwei beabstandete und parallel versetzte erste Reißverschluss-Einheiten vorhanden, deren Längsachsen zueinander parallel sind, und zusätzlich zwei weitere beabstandete und parallel versetzte zweite Reißverschluss-Einheiten vorhanden, deren Längsachsen zueinander parallel sind und quer zu den Längsachsen der ersten Reißverschluss-Einheiten. Zum Beispiel bilden die Reißverschlussmittel eine rahmenartige Anordnung außen entlang der Ränder des So_arzellen-Moduls.

Beispielsweise ist ein Solarzellen-Modul eine Einheit, welche zur Umwandlung von Lichtenergie in elektrische Energie ausgebildet ist bzw. zur Stromerzeugung geeignet ist. Beispielsweise umfasst das Solarzellen-Modul genau zwei oder mehr als zwei Unter-Einheiten bzw. können mehrere Unter-Einheiten, die das solarzellen-Modul bilden, zusammen wirken zur Stromerzeugung, zum Beispiel elektrisch zusammengeschlossen sein.

Beispielsweise ist für mehrere zusammengeschlossene Solarzellen-Unter-Einheiten genau eine Reißverschluss-Einheit vorgesehenen oder es sind mehrere Reißverschluss-Einheiten für mehrere zusammengeschlossene Solarzellen-Unter-Einheiten vorhanden.

Ein weiterer Aspekt der Erfindung ist darin zu sehen, dass ein Solarzellen-Modul vorgesehen ist, das mit dem Flächenelement verbunden ist, so dass bei Lichteinstrahlung auf das Solarzellen-Modul Lichtenergie in elektrische Energie umwandelbar ist, wobei Schnellverschlussmittel umfassend Klettverschlussmittel mit einer Klettverschluss-Einheit vorgesehen sind, um mit den Klettverschlussmitteln ein Solarzellen-Modul an dem Flächenelement lösbar anzuordnen.

Damit lässt sich die Verbindung mit den Klettverschlussmitteln schnell, einfach und beliebig oft reversibel einrichten bzw. schließen und wieder aufheben bzw. lösen. Dies erfolgt z. B. manuell, intuitiv und mit wenigen Handgriffen.

Beispielsweise weist eine Klettverschluss-Einheit zwei flache flexible Klettstreifen auf, die reversibel miteinander lösbar verhakbar sind. Eine Klettverschluss-Einheit ist zum Beispiel streifenförmig oder flächig ausgebildet. Die zwei Klettstreifen umfassen z. B. einen ersten Klettstreifen mit flexiblen Schlaufen, z. B. ein Flauschband. Die zwei Klettstreifen umfassen z. B. einen zweiten Klettstreifen mit flexiblen Widerhäkchen, z. B. ein Hakenband. Der erste Klettstreifen ist reversibel verhakbar mit dem zweiten Klettstreifen, z. B. durch gegenseitiges Andrücken. Zum Beispiel ist ein Klettstreifen der Klettverschluss-Einheit z. B. unlösbar am Flächenelement angebracht. Beispielsweise ist ein erster oder zweiter Klettstreifen der Klettverschluss-Einheit angenäht, verklebt, verschweißt oder einstückig am Flächenelement angebracht. Entsprechendes gilt für die Anbringung des anderen Klettstreifens, z. B. des zweiten oder ersten Klettstreifens der Klettverschluss-Einheit am Solarzellen-Modul.

Die Ausrichtung bzw. Anordnung von einer Klettverschluss-Einheit ist beispielsweise in Längsrichtung des Firstbereichs bzw. zur Längsrichtung des Firstelements. Die Ausrichtung bzw. Anordnung von einer Klettverschluss-Einheit ist beispielsweise quer oder schräg zur Längsrichtung des Firstbereichs bzw. zur Längsrichtung des Firstelements. Beispielsweise erstreckt sich eine Klettverschluss-Einheit entlang eines Längsrandes des Solarzellen-Moduls bzw. eines Flächenelements bzw. entlang eines Längsrandes eines streifenförmigen Bereichs des Flächenelements. Zum Beispiel ist es möglich, mehrere Klettverschluss-Einheiten mit untereinander gleicher und/oder unterschiedlicher Ausrichtung zur Verbindung eines Solarzellen-Moduls mit dem Flächenelement vorzusehen. Beispielsweise ist pro Solarzellen-Modul genau eine Klettverschluss-Einheit vorgesehen zum Verbinden mit dem Flächenelement. Beispielsweise sind pro Solarzellen-Modul genau zwei oder genau drei oder genau vier Klettverschluss-Einheiten vorgesehen zum Verbinden mit dem Flächenelement.

Beispielsweise ist das Solarzel_en-Modul flexibel ausgebildet. Beispielsweise weist das Solarzellen-Modul ein formveränderliches Verhalten auf, ohne dass die Funktion der Energieumwandlung und/oder -bereitstellung darunter leidet. Beispielsweise ist das Solarzel_en-Modul platzsparend zusammenlegbar. Beispielsweise ist das Solarzellen-Modul zumindest teilweise faltbar, elastisch, rollbar und/oder raffbar ausgebildet. Beispielsweise ist das Solarzellen-Modul mit einer vergleichsweise geringen Dicke im Millimeterbereich ausgebildet. Beispielsweise weist das Solarzellen-Modul eine Dicke im ein- oder zweistelligen Millimeterbereich auf. Zum Beispiel lässt sich das Solarzellen-Modul flächig ausgebreitet bereitstellen.

Beispielsweise ist das Solarzellen-Modul als Folien-Modul ausgebildet.

Beispielsweise ist das Solarzellen-Modul biegsam ausgebildet.

Beispielsweise ist das Solarzel_en-Modul als Flächenmodul ausbildbar bzw. ausgebildet.

Beispielsweise ist das Solarzel_en-Modul als Wickelmodul ausbildbar bzw. ausgebildet.

Beispielsweise ist das Solarzellen-Modul zusammenrollbar bzw. aufrollbar und wieder ausrollbar ausgebildet. Zum Beispiel lässt sich das Solarzellen-Modul in der aufgerollten Form z. B. als Wickel aufgerollt bereitstellen. Das aufgerollte Solarzellen-Modul ist kompakt bzw. platzsparend bereitstellbar z. B. für eine Lagerung oder den Transport.

Zum Beispiel ist das Solarzellen-Modul wahlweise flächig ausbreitbar als Flächenelement, zum Beispiel im angeordneten Zustand an der aufgebauten Vorrichtung. Zum Beispiel ist das Solarzellen-Modul wahlweise beispielsweise separiert vom Flächenelement als Wickel oder als mehrfach gefaltetes kompakt bereitstellbar. Zum Beispiel ist das Solarzellen-Modul als Mehrschicht-Modul gestaltet.

Beispielsweise umfasst das Solarzellen-Modul eine Dünnschicht-Solarzelle, beispielsweise eine Silizium-Solarzelle, umfassend eine lichtelektrisch aktive Schicht und eine Trägerschicht. Zum Beispiel stellt die Trägerschicht eine mechanische Stabilität des Solarzellen-Moduls bereit, z. B. ein Träger-Schichtbauteil.

Das Solarzellen-Modul ist z. B. mit einem Solarzellen-Schichtbauteil bzw. mit einem Photovoltaik-Schichtbauteil bzw. einem PV-Schichtbauteil, und einer Trägerschicht, z. B. ein Träger-Schichtbauteil, auf bzw.an dem das Solarzellen-Schichtbauteil aufgebracht ist, ausgebildet.

Beispielsweise ist ein Seitenteil der Reißverschluss-Einheit und/oder ein Klettstreifen der Klettverschluss-Einheit an der Trägerschicht vorhanden, z. B. an der Trägerschicht angenäht, verschweißt, verschmolzen und/oder angeklebt. Beispielsweise steht ein Rand der Trägerschicht über einen Rand der Solarzelle bzw. der Dünnschicht-Solarzelle über, wobei ein Seitenteil der Reißverschluss-Einheit und/oder ein Klettstreifen der Klettverschluss-Einheit an dem überstehenden Rand vorhanden. Zum Beispiel besteht die Trägerschicht aus einem Folien- oder aus einem Gewebematerial.

Zum Beispiel ist die Trägerschicht als auch das Solarzellen-Schichtbauteil flexibel gestaltet. Zum Beispiel sind sowohl das Trägerschicht als auch das Solarzellen-Schichtbauteil flächig oder punktuell oder linienförmig miteinander verbunden, z. B. verklebt.

Das Solarzellen-Modul ist insbes. ein Photovoltaik-Modul. Beispielsweise ist das Solarzellen-Modul ein dünnes Schichtelement. Beispielsweise ist das Solarzellen-Modul z. B. ein Folien-Schichtelement oder ein Textil- oder Folien-Bauteil oder ein Folienelement, z. B. ein Folien-Bauteil. Das Solarzellen-Teil ist auf einem Träger bzw. der Trägerschicht wie z. B. einer Folie integriert oder aufgebracht.

Beispielsweise ist das Solarzel_en-Modul als Photovoltaik-Modul, PV-Modul z. B. als Photovoltaik-Folie, als PV-Folie, PV-Folien-Modul oder als Solarzellen-Modul gestaltet.

Beispielsweise ist das Solarzellen-Modul flächig ausgebildet mit einer Flächenseite bzw. Oberseite, welche zur Lichtenergieumwandlung dient und nach außen gerichtet ist im angerbrachten Zustand des solarzellen-Moduls an der Vorrichtung.

Zum Beispiel ist das Solarzellen-Modul über einen Randbereich des Solarzellen-Moduls mittels den Reißverschlussmitteln mit dem Flächenelement lösbar verbunden. Alternativ oder zusätzlich ist zum Beispiel das Solarzellen-Modul über einen Randbereich des Solarzellen-Moduls mittels den Klettverschlussmitteln mit dem Flächenelement lösbar verbunden.

Dies ist besonders praktikabel zum Bedienen der Reißverschlussmittel bzw. der Klettverschlussmittel. Außerdem ermöglicht diese Lösung eine sichere Befestigung des Solarzellen-Moduls am Flächenelement. Die Art, Positionierung, Anzahl und/oder das Abmaß der Reißverschlussmittel bzw. deren Reißverschluss-Einheiten und/oder der Klettverschlussmittel bzw. deren Klettverschluss-Einheit sind dafür passend abgestimmt gewählt. Beispielsweise sind diese Parameter zum Beispiel von der Größe bzw. dem Abmaß, dem Gewicht und/oder der Form des Solarzellen-Moduls abhängig.

Zum Beispiel ist genau ein Solarzellen-Modul mit genau einer Reißverschluss-Einheit vorgesehen an der Vorrichtung bzw. an einem Flächenelement oder einem Flächenelement-Abschnitt.

Zum Beispiel ist genau ein Solarzellen-Modul mit genau einer Klettverschluss-Einheit vorgesehen an der Vorrichtung bzw. an einem Flächenelement oder einem Flächenelement-Abschnitt.

Beispielsweise ist das Solarzel_en-Modul entlang von zwei gegenüberliegenden Rändern des Solarzellen-Moduls mit dem Flächenelement lösbar verbunden, z. B. linear verbunden. Zum Beispiel weist das Solarzellen-Modul einen im Wesentlichen mehreckigen bzw. viereckigen wie einen rechteckigen Grundriss auf. Zum Beispiel weist das Solarzellen-Modul in der Grundform eine viereckige oder rechteckige Außenkontur auf.

Beispielsweise ist ein Seitenteil der Reißverschluss-Einheit z. B. unlösbar am Flächenelement angebracht. Beispielsweise ist ein Seitenteil der Reißverschluss-Einheit angenäht, verklebt, verschweißt oder einstückig am Flächenelement angebracht. Entsprechendes gilt für die Anbringung des anderen Seitenteils am Flächenelement.

Beispielsweise weist eine Klettverschluss-Einheit zwei miteinander lösbar verhakbare Klettstreifen auf. Die zwei Klettstreifen umfassen z. B. einen Klettstreifen mit flexiblen Schlaufen, z. B. ein Flauschband. Die zwei Klettstreifen umfassen z. B. einen Klettstreifen mit flexiblen Widerhäkchen, z. B. ein Hakenband. Zum Beispiel ist ein Klettstreifen der Klettverschluss-Einheit z. B. unlösbar am Flächenelement angebracht. Beispielsweise ist ein Klettstreifen der Klettverschluss-Einheit angenäht, verklebt, verschweißt oder einstückig am Flächenelement angebracht. Entsprechendes gilt für die Anbringung des anderen Klettstreifens der Klettverschluss-Einheit am Flächenelement.

Beispielsweise ist alternativ ein Seitenteil der Reißverschluss-Einheit lösbar bzw. zerstörungsfrei trennbar z. B. eingehängt am Flächenelement angebracht. Entsprechendes gilt für die Anbringung des anderen Seitenteils am Flächenelement, wenn dieser nicht unlösbar angebracht ist.

Nach einem weiteren Beispiel weist eine Reißverschluss-Einheit einen Schieber und zwei längliche miteinander lösbar verhakbare Seitenteile aufweist, wobei ein Seitenteil der Reißverschluss-Einheit an dem Solar-Modul vorhanden ist und ein anderes Seitenteil der dazugehörigen Reißverschluss-Einheit an dem Flächenelement vorhanden ist. Zum Beispiel umfassen die Seitenteile flache flexible Bänder zum Beispiel Gewebebänder.

Zum Beispiel ist die Reißversch_uss-Einheit eine übliche Reißverschluss-Einheit bzw. eine Standard-Reißverschluss-Einheit. Zum Beispiel sind die beiden Seitenteile dünn und flexibel. Zum Beispiel sind die beiden Seitenteile als längliche und schmale Teile ausgebildet, die über den Schieber zusammenwirken bzw. trennbar und verhakbar sind. Zum Beispiel sind mit der Reißverschluss-Einheit beide Seitenteile derart vorhanden, dass die beiden Seitenteile funktionsrichtig die lösbare Anordnung des Solar-Moduls an dem Flächenelement bereitstellen gemäß der Funktion der Reißverschlussmittel. Eine Reißverschluss-Einheit umfasst den Schieber und die zwei länglichen miteinander verhakbaren Seitenteile. Zum Beispiel weist jedes Seitenteil, eine Vielzahl regelmäßig angeordnete daran ausgebildete Einhakorgane auf. Die Einhakorgane sind zum Beispiel zahnartig. Mit dem Schieber sind die Einhakorgane des einen Seitenteils mit den Einhakorganen des anderen Seitenteils miteinander verhakbar und wieder voneinander lösbar. Im verhakten Zustand der Einhakorgane sind beide Seitenteile fest verbunden miteinander.

Es ist zum Beispiel derart, dass die Reißverschlussmittel zwei Reißverschluss-Einheiten aufweisen, die jeweils unabhängig voneinander funktionieren, für eine lösbare Anordnung des Solarzellen-Moduls an dem Flächenelement. Die zwei Reißverschluss-Einheiten funktionieren z. B. separat. Zum Beispiel sind genau zwei Reißverschluss-Einheiten oder die mehr als genau zwei Reißverschluss-Einheiten, jeweils separat voneinander vorhanden. Beispielsweise sind die zwei bzw. die mehreren Reißverschluss-Einheiten alle identisch aufgebaut. Beispielsweise weisen die genau zwei Reißverschluss-Einheiten die gleiche Länge auf. Beispielsweise unterscheiden sich die zwei bzw. die mehreren Reißverschluss-Einheiten untereinander, z. B.in der Art und/oder in der Länge.

Zum Beispiel ist genau ein Solarzellen-Modul mit genau zwei Reißverschluss-Einheiten mit dem Flächenelement lösbar verbunden. Zum Beispiel sind pro Solarzellen-Modul die genau zwei oder mehr als zwei Reißverschluss-Einheiten getrennt voneinander vorhanden und jeweils durchgehend gestaltet. Beispielsweise ist ein Solarzellen-Modul mittels genau zwei Reißverschluss-Einheiten, die im Bereich von gegenüberliegenden Rändern des Solarzellen-Moduls dieses mit dem Flächenelement verbinden, mit dem Flächenelement verbunden.

Eine erste Reißverschluss-Einheit weist ein Seitenteil an einem ersten Rand des Solarzellen-Moduls auf und das dazugehörige andere Seitenteil der Reißverschluss-Einheit ist am Flächenelement vorhanden.

Eine zweite Reißverschluss-Einheit weist ein Seitenteil an einem zweiten Rand des Solarzellen-Moduls auf und das dazugehörige andere Seitenteil der Reißverschluss-Einheit ist am Flächenelement vorhanden.

Am Flächenelement sind demgemäß die beiden Seitenteile in einem Abstand entsprechend einem Abstand der dazugehörigen Seitenteile am Solarzellen-Modul vorhanden.

Beispielsweise ist genau ein Solarzellen-Modul mit genau einem Flächenelement verbunden, z. B. mit genau einem Flächenelement-Abschnitt verbunden. Zum Beispiel ist der Flächenelement-Abschnitt räumlich fixiert. Z. B. weist der Flächenelement-Abschnitt einen streifenförmiger in Richtung zum Firstbereich nächsten bzw. obersten Folienabschnitt auf. Zum Beispiel ist der Flächenelement-Abschnitt ein Folienabschnitt, der an zwei gegenüberliegenden Rändern wie z. B. Längsrändern an einem Träger des Flächenelements wie einem Trägernetz befestigt ist. Dadurch ist der Abschnitt im Wesentlichen immer gleichbleibend räumlich ausgerichtet, da der Träger und die Folie verspannt ausgebreitet sind am Schutzdach. Zum Beispiel bildet der Träger eine gespannte Unterseite des Flächenelements. Zum Beispiel ist der Träger flächig aufgespannt durch z. B. Spannmittel wie Spanndrähte. Eine räumliche Ausrichtung des befestigten Solarzellen-Moduls bleibt zumindest im Wesentlichen erhalten an dem Flächenelement bzw. am flächigen Schutzdach. Damit ist eine optimale Leistung des Solarzellen-Moduls für die Stromerzeugung auch z. B. bei Wind gewährleistet.

Beispielsweise weist ein an das Solarzellen-Modul benachbarter Abschnitt des Flächenelements einen Folienabschnitt auf, der zum Beispiel mit einem Längs-Rand des Folienabschnitt am Träger fixiert ist und an einem anderen Rand wie z. B. einem gegenüberliegenden Längsrand des Folienabschnitts nicht verbunden ist mit dem Träger. Damit ist der benachbarte Abschnitt bzw. der Folienabschnitt einseitig vom Träger hochklappbar, was zum Beispiel durch Wind oder Thermik bewirkt wird.

Eine beispielhafte Variante zeichnet sich dadurch aus, dass zwei Reißverschluss-Einheiten derart vorgesehen sind, dass eine lösbare Anordnung von gegenüberliegenden Rändern des Solarzellen-Moduls an dem Flächenelement eingerichtet ist.

Beispielsweise sind genau zwei Reißverschluss-Einheiten vorhanden für genau ein Solarzellen-Modul. Beispielsweise wenn mehreren Solarzellen-Modulen an dem Flächenelement vorhanden sind, sind für jedes einzelne bzw. ist für jeweils genau ein Solarzellen-Modul zum Beispiel genau zwei Reißverschluss-Einheiten vorgesehen. Bei den zwei Reißverschluss-Einheiten sind die beiden Reißverschluss-Einheiten räumlich beabstandet am Solarzellen-Modul und am Flächenelement. Zum Beispiel wirken die beiden Reißverschluss-Einheiten separat bzw. voneinander unabhängig. Jede einzelne Reißverschluss-Einheit ist jeweils separat von anderen Reißverschluss-Einheiten bedienbar wie z. B. aufziehbar oder zuziehbar bzw. im offenen, teils offenen oder geschlossenen Zustand vorhanden.

Zum Beispiel ist zur lösbaren Anbringung des Solarzellen-Moduls am Flächenelement genau eine Reißverschluss-Einheit und genau eine Klettverschluss-Einheit vorgesehen. Beispielsweise sind auch sämtliche andere Kombinationen der Anzahl von Reißverschluss-Einheiten und Klettverschluss-Einheiten zur Anbringung des Solarzellen-Moduls am Flächenelement möglich.

Eine jeweilige Reißverschluss-Einheit ist geschlossen, wenn beide Seitenteile miteinander verhakt sind, womit das Solarzellen-Modul im Betrieb des Schutzdaches elektrische Energie erzeugen bzw. bereitstellen kann. Die eigentliche Grundfunktion des ausgebreiteten Schutzdaches bleibt unabhängig vom Vorhandensein des Solarzellen-Moduls dauerhaft und vollständig erhalten. Bei am Flächenelement angeordnetem Solarzellen-Modul wird bei Lichteinstrahlung elektrische Energie bereitgestellt zum Beispiel für elektrische Verbraucher im Nahbereich des Schutzdaches und/oder zur Einspeisung von Strom bzw. elektrischer Energie in ein Energieversorgungsnetz oder in eine Energiespeichereinheit.

Gemäß der Erfindung ist das Solarzellen-Modul in einem Bereich der Vorrichtung vorhanden, welcher benachbart zu einem Firstelement des Firstbereichs ist. Das Solarzellen-Modul ist in einem Streifen des Flächenelements, der parallel zum Firstelement verläuft, in diesen Streifen benachbart zum Firstelement vorhanden. Zum Beispiel grenzt ein Rand des Solarzellen-Moduls an den Firstbereich an. Beispielsweise grenzt ein Rand des Solarzellen-Moduls an den Firstbereich unmittelbar an oder etwas versetzt zu einem oberen Ende des Firstbereichs, zum Beispiel um 5 bis 10 cm nach unten versetzt zum oberen Ende des Firstelements.

Beispielsweise erstreckt sich der Firstbereich in Längsrichtung des Firstelements. Zum Beispiel ist der Firstbereich streifenförmig, zum Beispiel 40 Zentimeter (cm) bis 60 cm breit, zum Beispiel 55 cm breit. Beispielsweise weist der Firstbereich gegenüberliegende Längsränder auf, wobei ein Längsrand dem Firstelement zugewandt ist z. B. sich entlang des Firstelements erstreckt z. B. sich parallel zur Längsachse des Firstelements erstreckt.

Zum Beispiel beträgt ein vom angeordneten Solarzellen-Modul überdeckter Bereich einer Gesamtfläche des Schutzdaches zwischen 5 % und 100 % der Gesamt-Schutzdachfläche. Ein Maß der Überdeckung ist zum Beispiel von der Art der überdeckten Kultur abhängig.

Das angeordnete Solarzellen-Modul überdeckt zum Beispiel 70 % bis 100 % einer Gesamt-Fläche des Firstbereichs.

Beispielsweise weist das Solarzellen-Modul eine Breite von 15 bis 60 cm auf, zum Beispiel weist das Solarzellen-Modul eine Breite von 30 bis 55 cm auf, z. B. 35 cm, oder eine Breite von 55 cm.

Beispielsweise steht das Flächenelement entlang eines Längsrandes oder entlang beider Längsränder des Solarzellen-Moduls, also einseitig oder beidseitig, um durchgehend 5 bis 15 Zentimeter zum jeweiligen Längsrand seitlich über. Beispielsweise steht beidseitig längsseitig das Flächenelement über die Längsränder des Solarzellen-Moduls durchgehend 10 Zentimeter über.

Eine Länge des Solarzellen-Moduls entspricht beispielsweise einer Gesamt-Länge des Firstbereichs bzw. des darunter vorhandenen Flächenelements bzw. einer Gesamt-Länge des Firstelements.

Beispielsweise beträgt, bezogen auf eine mit dem Flächenelement des Schutzdaches aufgespannte Gesamt-Fläche des Schutzdaches, der Anteil der Gesamt-Fläche, welche mit dem Solarzellen-Modul versehen ist, zwischen 5 und 100 % der Gesamt-Fläche des Schutzdaches. Beispielsweise beträgt, bezogen auf die mit dem Flächenelement des Schutzdaches aufgespannte Gesamt-Fläche des Schutzdaches, der Anteil der Gesamt-Fläche, welche mit dem Solarzellen-Modul versehen ist, zum Beispiel 10 %, zum Beispiel 20 Prozent, zum Beispiel 30 %, zum Beispiel 40 % zum Beispiel 50 % oder zum Beispiel mehr als 50 % der Gesamt-Fläche des Schutzdaches.

Das Solarzellen-Modul umfasst genau ein zusammenhängendes Bauteil oder umfasst mehrere getrennte Solarzellen-Teilmodule wie z. B. mehrere gleiche oder unterschiedliche Solarzellen-Teilmodule. Dadurch lassen sich die einzelnen Solarzellen-Teilmodule an individuell wählbaren bzw. verschiedenen Bereichen des Flächenelements anordnen. Zum Beispiel ist jedes Solarzellen-Teilmodul mit z. B. genau einer Reißverschluss-Einheit oder mit genau zwei Reißverschluss-Einheiten am Flächenelement oder mit mehr als zwei Reißverschluss-Einheiten lösbar anbringbar bzw. angebracht am Flächenelement.

Nach einer beispielhaften Abwandlung sind eine erste Reißverschluss-Einheit und eine zweite Reißverschluss-Einheit mit jeweils zwei Seitenteilen und einem Schieber vorgesehen, wobei an dem Solarzellen-Modul entlang eines ersten Längsrandes des Solarzellen-Moduls ein Seitenteil der ersten Reißverschluss-Einheit vorhanden ist und wobei an dem Solarzellen-Modul entlang eines zweiten Längsrandes des Solarzellen-Moduls ein Seitenteil der zweiten Reißverschluss-Einheit vorhanden ist. Dadurch lässt sich ein Solarzellen-Modul stabil und sicher an dem Flächenelement anordnen. An dem Flächenelement sind entsprechend ein Seitenteil der ersten Reißverschluss-Einheit und ein Seitenteil der zweiten Reißverschluss-Einheit vorhanden. An dem Flächenelement sind die Seitenteile in ihrer Ausrichtung und im Abstand zueinander entsprechend der Ausrichtung und dem Abstand zueinander wie am Solarzellen-Modul vorhanden.

Nach einer beispielhaften Abwandlung der Erfindung umfassen die Reißverschlussmittel eine erste Reißverschluss-Einheit und eine zweite Reißverschluss-Einheit mit jeweils zwei Seitenteilen, wobei an dem Flächenelement ein Seitenteil der ersten Reißverschluss-Einheit vorhanden ist und wobei an dem Flächenelement beabstandet zu dem Seitenteil der ersten Reißverschluss-Einheit ein Seitenteil der zweiten Reißverschluss-Einheit vorhanden ist. Eine Reißverschluss-Einheit umfasst standardgemäß zudem einen Schieber, der zwischen den beiden Seitenteilen öffnend und schließend wirkt. Beispielsweise ist das Seitenteil der ersten Reißverschluss-Einheit und/oder das Seitenteil der zweiten Reißverschluss-Einheit an dem Flächenelement durch ein Fügeverfahren mit Nadel und Faden angebracht bzw. angenäht durch einen Faden oder durch mehrere Fäden. Zum Beispiel erfolgt die Anbringung eines Seitenteils am Flächenelement durch eine Klebeverbindung und/oder eine Schweißverbindung z. B. eine Thermoplast- bzw. Kunststoff-Schweißverbindung. Die Anbringung durch Kleben oder Verschweißen kann alternativ oder zusätzlich zur Anbringung durch eine Näh-Fügeverbindung erfolgen.

Beispielsweise ist das andere Seitenteil der ersten Reißverschluss-Einheit an einem ersten Rand wie einem ersten Längsrand des Solarzellen-Moduls angebracht. Beispielsweise ist das andere Seitenteil der zweiten Reißverschluss-Einheit an einem zweiten Rand wie einem zweiten Längsrand des Solarzellen-Moduls angebracht.

Das Flächenelement weist einen ersten Flächenelement-Abschnitt auf, der benachbart zum Firstelement vorhanden ist und sich in Längsrichtung des Firstelements erstreckt, wobei das Flächenelement einen zweiten Flächenelement-Abschnitt umfasst, der benachbart zum ersten Flächenelement-Abschnitt vorhanden ist, auf einer dem Firstelement abgewandten Seite des ersten Flächenelement-Abschnitts, wobei das Solarzellen-Modul auf einer Außenseite des ersten Flächenelement-Abschnitts vorhanden ist.

Damit ist die Positionierung des Solarzellenmoduls in einer vorteilhaften bzw. maximalen Höhe des Schutzdaches möglich.

Beispielsweise erstreckt sich der erste Flächenelement-Abschnitt streifenförmig, zum Beispiel entlang einer Gesamt-Länge des Firstbereichs. Zum Beispiel bildet der erste Flächenelement-Abschnitt den Firstbereich, zum Beispiel beidseitig einer Längsseite des Firstelements. Zum Beispiel ist der erste Flächenelement-Abschnitt von einer dem Firstelement zugewandten Seite zu einer dem Fristelement abgewandten Seite nach unten geneigt bzw. zur Horizontalen geneigt. Beispielsweise beträgt eine Breite des ersten Flächenelement-Abschnitts quer zur Längsachse des Firstelements zwischen 40 und 70 Zentimeter. Zum Beispiel beträgt eine Breite des ersten Flächenelement-Abschnitts 55 Zentimeter. Der zweite Flächenelement-Abschnitt beträgt eine mehrfache Breite der Breite des ersten Flächenelement-Abschnitts.

Beispielsweise umfasst der zweite Flächenelement-Abschnitt mehrere parallele streifenförmige Abschnitte aus jeweils einem oberseitigen Folienelement wie z. B. einem Folienstreifen. Zum Beispiel ist ein Folienelement oder zum Beispiel jedes Folienelement jeweils entlang eines oberen Längsrandes des Folienelements an einem darunter vorhandenen Träger des Flächenelements wie z. B. einem Hagelnetz verbunden vorhanden, z. B. angenäht. Zum Beispiel sind gegenüberliegende stirnseitige seitliche Ränder und ein unterer Längsrandes des Folienelements frei aufliegend auf dem Träger.

Beispielsweise ist der Träger unterhalb des ersten Flächenelement-Abschnitts und des zweiten Flächenelement-Abschnitts zum Beispiel der sämtlichen mehreren Folienelement vorhanden. Der Träger wie das Hagelnetz ist zum Beispiel durchgehend ein einheitliches Netzelement, das verspannt ist und sich flächig aufspannt. Beispielsweise gibt die räumliche Ausrichtung des gespannten Trägers die Neigung des ersten Flächenelement-Abschnitts und des zweiten Flächenelement-Abschnitts vor bzw. für sämtliche Folienelemente.

In der Regel erstreckt sich der zweite Flächenelement-Abschnitt bis zu einem traufseitigen bzw. unteren Längsrand des Flächenelements bzw. des damit aufspannbaren Schutzdaches.

Beispielsweise umfasst das Flächenelement eine außenliegende Folie und einen unter der Folie vorhandenen Träger wie ein Netzelement. Beispielsweise ist die Folie ein flexibles flächiges Folienbauteil. Beispielsweise ist die Folie flächig geschlossen bzw. ohne Löcher bzw. z. B. ist die Folie nicht perforiert. Beispielsweise ist die Folie dicht gegenüber Regen, Schnee und Wind. Beispielsweise ist die Folie aus einem Kunststoffmaterial. Beispielsweise ist die Folie lichtdurchlässig bzw. transparent oder teilweise transparent für Anteile des Lichtes bzw. des Sonnenlichtes. Beispielsweise bildet die Folie im Nutzzustand der Vorrichtung eine zur Atmosphäre gerichtet Außenseite des Flächenelements, wie eine Oberseite des Flächenelements, z. B. eine Außenseite des Schutzdaches.

Beispielsweise ist der Träger regelmäßig perforiert mit einer Vielzahl von materialfreien Öffnungen bzw. Löchern. Beispielsweise ist der Träger ein Netzelement wie ein textiles flexibles Netzelement. Beispielsweise ist das Netzelement ein Hagelschutznetz bzw. ein Hagelnetz und/oder ein Insektenschutznetz. Beispielsweise ist das Netzelement aus dem landwirtschaftlichen Einsatz bekannt zum Beispiel zum Hagelschutz oder Insektenschutz von Obstkulturen wie z. B. Kirschbäumen und dergleichen.

Weiter ergibt sich eine andere beispielhafte Ausgestaltung, wenn das Solarzellen-Modul ein flexibles Trägermaterial umfasst, an dem ein Seitenteil einer Reißverschluss-Einheit angebracht ist. Beispielsweise ist es einfach möglich das regelmäßig zum Beispiel flexible Seitenteil an dem flexiblen Trägermaterial des Solarzellen-Moduls anzunähen. Beispielsweise ist das Trägermaterial des Solarzellen-Moduls ein dünnes biegbares Material. Beispielsweise ist das Trägermaterial ein Folienmaterial. Beispielsweise ist das Trägermaterial ein flächiges Material wie ein flächiges Folienmaterial, Kunststoffmaterial oder wie ein flächiges Textil- oder Gewebematerial.

Beispielsweise ist die PV-Einheit bzw. die lichtelektrisch aktive Schicht bzw. die photovoltaisch aktive Schicht des Solarzellen-Moduls an dem Trägermaterial vorhanden, z. B. angebracht oder integriert.

Beispielsweise ist ein Seitenteil einer Reißverschluss-Einheit angenäht vorhanden, wie an dem Flächenelement oder an einem Trägermaterial des Solarzellen-Moduls. Bei bestehenden Fertigungseinrichtungen und Fertigungsverfahren für Überdachungssysteme mit flexiblen Flächenelementen kommen regelmäßig Nähvorrichtungen zum Verbinden oder Anbringen von Bestandteilen zum Einsatz. Derartige Nähvorrichtungen könne dann auch zum Herstellen der erfindungsgemäßen Vorrichtung bzw. eines erfindungsgemäßen Überdachungssystem genutzt werden.

Beispielsweise ist ein Reißverschluss-Seitenteil angenäht an einer Folie, und/oder einem Netzgewebe und dergleichen vorhanden. Beispielsweise erfolgt das Annähen des Seitenteils einer Reißverschluss-Einheit an einer Folie und an einem darunter vorgesehenen Trägermaterial in z. B. genau einem Nähvorgang, wobei dabei zum Beispiel gleichzeitig das Flächenelement mit dem Trägermaterial und/oder weiterer Teile der Vorrichtung verbindbar ist.

Gemäß einer beispielhaften Gestaltung umfasst das Solarzellen-Modul eine Elektro-Kontaktstelle, wobei die Vorrichtung einen Leitungsabschnitt aufweist, welcher an einem Bauteil der Vorrichtung fixiert ist und zur elektrischen Kontaktierung der Elektro-Kontaktstelle des Solarzellen-Moduls vorgesehen ist. Solch ein Leitungsabschnitt umfasst zum Beispiel ein Elektrokabel. Zum Beispiel ist ein Leitungsabschnitt an einem bestehenden Abschnitt der Vorrichtung wie der Stützanordnung bzw. an Stützen und/oder einem Firstelement gehalten. Zum Beispiel ist der Leitungsabschnitt entlang dieser Bauteile von außen an die Kontaktstelle des Solarzellen-Moduls heranführbar. Zum Beispiel ist eine elektrisch leitende und elektrisch nach außen isolierte Verbindung zwischen der Kontaktstelle zu einem Stromspeicher oder zu einem Energie- bzw. Elektronetz möglich.

Beispielsweise sind Haltemittel derart vorhanden, einen Bereich des Flächenelements in einer Lagerstellung zu halten, um den Bereich des Flächenelements in einer nicht abdeckenden Anordnung temporär derart anzuordnen, dass der Bereich des Flächenelements in der Lagerstellung nach oben in Richtung des Firstbereichs zusammengefaltet oder zusammengerollt oder zusammengerafft und unterhalb eines mit dem Solarzellen-Modul verbundenen Flächenelement-Abschnitts gehalten ist, wobei der Bereich des Flächenelements in der Lagerstellung vom dem mit dem Solarzellen-Modul verbundenen Flächenelement-Abschnitt überdeckt ist.

Zum Beispiel kann das Solarzellen-Modul, zusätzlich oder alternativ zur elektrischen Energieerzeugung, eine weitere Funktion im Überdachungs-System erfüllen. Beispielsweise im Winter, z. B. bei nicht eingerichteter Überdachungsfunktion des Schutzdaches dient der Bereich des Flächenelements, der mit dem Solarzellen-Modul versehen ist, in der Art einer Abdeckung für das restliche Flächenelement, wenn dieses z. B. zusammengefaltet bzw. kompakt und komprimiert unterhalb des Flächenelementbereichs mit Solarzellen-Modul mit den Haltemitteln gehalten wird. Das Solarzellen-Modul bildet dann z. B. einen UV-, Temperatur-, Regen- und/oder Schneeschutz oder einen anderweitigen mechanischen und chemischen Materialschutz für das Flächenelement. Gleichzeitig bleibt die vorteilhafte Energiegewinnungsfunktion des Solarzellen-Moduls zur Erzeugung von elektrischer Energie aus Lichtenergie erhalten, auch z. B. im Winter oder Herbst. Beispielsweise umfassen die Haltemittel längliche Elemente wie z. B. elastische Elemente. Beispielsweise umfassen die Haltemittel einen Spanngummi und/oder einen Kabelbinder und/oder ein Seil und/oder ein Band und/oder einen Draht und/oder ein Folien- oder Netzstreifen oder dergleichen.

Nach einer beispielhaften Ausbildung umfassen die Haltemittel ein längliches flexibles Umschlingungsorgan, wobei das Umschlingungsorgan außen an dem zusammengefalteten oder zusammengerollten Bereich des Flächenelements in der Lagerstellung umschlingend anordenbar ist. Das Umschlingungsorgan ist zum Beispiel auf Zug belastbar. Beispielsweise weist das Umschlingungsorgan an einem Ende ein Hakenelement auf, zum Einhaken an einem Einhakabschnitt zum Beispiel an einem Einhakabschnitt der Stützanordnung oder zum Beispiel dem Firstelement oder am anderen Ende des Umschlingungsorgans. Zum Beispiel ist das Umschlingungsorgan schleifenförmig.

Beispielsweise bezieht sich die Erfindung auf eine Vorrichtung zur Anbringung an einer Überdachungsvorrichtung, wobei die Überdachungsvorrichtung zur Überdachung eines Bereichs im Freien, wie Anbauflächen für Kultur- oder Nutzpflanzen oder von anderen wirtschaftlich genutzte Flächen dient, wobei die Überdachungsvorrichtung ein Flächenelement und eine Stützanordnung mit Stützen umfasst, und wobei das von der Stützanordnung getragene Flächenelement zur Bildung eines flächigen Schutzdaches oberhalb des Bereichs dient.

Zum Beispiel weist die Vorrichtung ein Solarzellen-Modul auf, das mit einem Nachrüst-Flächenelement verbunden ist, wobei die Vorrichtung als eine Nachrüstanordnung für eine Anbringung der Vorrichtung an der Überdachungsvorrichtung derart ausgebildet ist, dass das Nachrüst-Flächene_ement an dem Flächenelement der Überdachungsvorrichtung nachträglich anbringbar ist.

Beispielsweise ist an einem zusammenhängend ausgebildeten Nachrüst-Flächenelement genau ein Solarzellen-Modul angebracht. Beispielsweise sind an einem zusammenhängend ausgebildeten Nachrüst-Flächenelement mehrere Solarzellen-Module angebracht, beispielsweise mehrere identische Solarzellen-Module.

Beispielsweise ist das mit dem Solarzellen-Modul versehene Nachrüst-Flächenelement derart ausgebildet, dass es auf genau einer vom Firstbereich schräg geneigten Seite des Schutzdaches anbringbar ist. Beispielsweise ist der Bereich mit dem Solarzellen-Modul entlang einer Längsachse des Nachrüst-Flächenelements vorhanden.

Beispielsweise ist das mit dem Solarzellen-Modul versehene Nachrüst-Flächenelement derart ausgebildet, dass es auf beiden Seiten des Firstbereichs vorhanden ist. Beispielsweise ist das mit dem Solarzellen-Modul versehene Nachrüst-Flächenelement derart ausgebildet, dass es den Firstbereich und jeweils nach unten anschließende Abschnitte des von der Überdachungsvorrichtung gebildeten Schutzdaches überdeckt. Die jeweils überdeckten Bereiche sind jeweils geneigt, zum Beispiel unterschiedlich räumlich geneigt zum Beispiel unter einem gleichen Winkel zur Senkrechten. Zum Beispiel sind an einem solchen Nachrüst-Flächenelement zwei beabstandete parallel verlaufende Bereiche des Nachrüst-Flächenelements mit einem Solarzellen-Modul versehen. Dazwischen ist ein Abstand zwischen den beiden Solarzellen-Modul-Bereiche vorhanden. Der Abstand überdeckt im angebrachten Zustand der Vorrichtung an der Überdachungsvorrichtung den Firstbereich der vorhandenen Überdachungsvorrichtung.

Damit ist das Solarzellen-Modul vorteilhaft an einer bestehenden Überdachungsvorrichtung anbringbar, zum Beispiel an einer üblichen Überdachungsvorrichtung. Vorteilhaft kann die bestehende Überdachungsvorrichtung zur Energiegewinnung aus Sonnenlicht dauerhaft und/oder temporär genutzt werden.

Beispielsweise erfolgt die zum Beispiel nachträgliche Anbringung des Nachrüst-Flächenelements an dem Flächenelement der bereits bestehenden Überdachungsvorrichtung mit Anbringmitteln, wie beispielsweise Schnellverschlussmittel. Zum Beispiel umfassen die Anbringmittel zum Beispiel Reißverschlussmittel und/oder Klettverschlussmittel und/oder Druckknopfverschlussmittel und/oder Klebemittel. Beispielsweise erfolgt die nachträgliche Anbringung des Nachrüst-Flächenelements an dem Flächenelement der bereits bestehenden Überdachungsvorrichtung durch Annähen.

Beispielsweise erfolgt die nachträgliche Anbringung des Nachrüst-Flächenelements an dem Flächenelement der bereits bestehenden Überdachungsvorrichtung mit Anbringmitteln, die bei Überdachungen wie Überdachungen in der Landwirtschaft wie im Bereich der Bewirtschaftung von Kultur- oder Nutzpflanzen bekannt oder üblich sind. Dies ist wirtschaftlich und technisch vorteilhaft, zum Beispiel auch im Handling vorteilhaft. Zum Beispiel betreffen die Anbringmittel, solche Mittel, welche zur z. B. temporären oder dauerhaften Anbringung des Nachrüst-Flächenelements an dem Flächene_ement der Überdachungsvorrichtung ausgebildet sind.

Zum Beispiel erfolgt die Anbringung des mit dem Solarzellen-Modul versehenen Nachrüst-Flächenelements an einer bereits im Nutzzustand befindlichen Überdachungsvorrichtung z. B. im Freien. Zum Beispiel erfolgt die Anbringung des mit dem Solarzellen-Modul versehenen Nachrüst-Flächenelements auf einer Oberseite bzw. oben auf einem vorhandenen Flächenelement bzw. auf einer Oberseite eines Flächenelements der bestehenden Überdachungsvorrichtung. Zum Beispiel ist das Flächenelement der bestehenden Überdachungsvorrichtung z. B. eine Folie, ein Netz, ein Hagelnetz, ein Gewebe und/oder ein anderes flexibles Flächenelement.

Zum Beispiel ist das Nachrüst-Flächenelement anbringbar an einem Flächenelement der bestehenden Überdachungsvorrichtung, wobei das Flächenelement benachbart ist zu einem Firstbereich der bestehenden Überdachungsvorrichtung zur Überdachung von Flächen im Freien, z. B. Anbauflächen für Kultur- oder Nutzpflanzen oder andere wirtschaftlich genutzte Flächen, wobei die Stützanordnung an einer Bodenfläche des Bereichs verankerbar ist.

Beispielsweise ist das Nachrüst-Flächenelement flexibel, z. B. aufrollbar und faltbar. Beispielsweise ist das Nachrüst-Flächenelement streifenförmig, zum Beispiel rechteckförmig in der Grundfläche.

Zum Beispiel ist das Nachrüst-Flächenelement eine Folie, ein Netz, ein Hagelnetz, ein Gewebe und/oder ein anderes flexibles Flächenelement.

Beispielsweise erstreckt sich das Nachrüst-Flächenelement im angebrachten Zustand an der Überdachungsvorrichtung über einen z. B. oberen bzw. firstnahen Teilbereich des von der Überdachungsvorrichtung bereitgestellten Schutzdaches.

Beispielsweise erstreckt sich das Nachrüst-Flächenelement im angebrachten Zustand an der Überdachungsvorrichtung, mit einer Längsseite des Nachrüst-Flächenelements entlang verlaufend am Firstbereich, vom Firstbereich nach unten in Richtung eines Traufbereichs. Zum Beispiel erstreckt sich das Nachrüst-Flächenelement im angebrachten Zustand an der Überdachungsvorrichtung von oben bis über circa 20 Prozent der gesamten Breite oder einer Höhe einer Dach-Seite des Schutzdaches der Überdachungsvorrichtung. Zum Beispiel beträgt eine Breite des z. B. streifenförmigen Nachrüst-Flächenelements 0,1 Meter, 0,2 Meter, 0,3 Meter, oder 0,4 Meter bis 0,6 Meter zum Beispiel 0,5 Meter, bezogen auf die linke oder die rechte Seite relativ zu einem Firstelement des Firstbereichs. Beispielsweise bei zusammenhängender Ausgestaltung des Nachrüst-Flächenelements über das Firstelement hinweg und beidseitiger Erstreckung zum Firstbereich beträgt die Breite des Nachrüst-Flächenelements z. B. 0,2 bis 1,2 Meter. Zum Beispiel ist ein überwiegender Anteil der betreffenden Flächenseite des Nachrüst-Flächenelements von dem Solarzellen-Modul bedeckt. Zum Beispiel ist 10 % bis über 90 %, zum Beispiel 70 % bis 90 %, zum Beispiel 80 % der betreffenden Flächenseite des Nachrüst-Flächenelements von dem Solarzellen-Modul bedeckt.

Beispielsweise ist das Solarzel_en-Modul an dem Nachrüst-Flächenelement lösbar und/oder nicht-lösbar angebracht. Die Verbindung des Solarzellen-Moduls mit dem Nachrüst-Flächenelement ist lösbar oder nicht-lösbar.

Zum Beispiel umfasst die Nachrüstanordnung Schnellverschlussmittel zur Anbringung des Solarzellen-Moduls an dem Nachrüst-Flächenelement umfassend Reißverschlussmittel mit einer Reißverschluss-Einheit und/oder umfassend Klettverschlussmittel und/oder Druckverschlussmittel.

Beispielsweise ist das Solarzel_en-Modul an dem Nachrüst-Flächenelement angenäht.

Beispielsweise ist das Solarzel_en-Modul an dem Nachrüst-Flächenelement angeklebt.

Beispielsweise ist das Solarzel_en-Modul viereckig in der Grundfläche.

Beispielsweise ist das Solarzel_en-Modul entlang seiner Ränder, zum Beispiel entlang von gegenüberliegenden Längsrändern mit dem bzw. an dem Nachrüst-Flächenelement verbunden.

Zum Beispiel ist das Nachrüst-Flächenelement lösbar und/oder unlösbar mit dem Flächenelement der Überdachungsvorrichtung verbindbar.

Beispielsweise ist das Nachrüst-Flächenelement mit dem Flächenelement der Überdachungsvorrichtung mit Hilfe einer Plakette verbindbar. Beispielsweise umfasst die Plakette zwei Elemente, zwischen denen ein Abschnitt des Nachrüst-Flächenelements und ein Abschnitt des Flächenelement der Überdachungsvorrichtung zusammengedrückt und fixiert sind. Dabei werden die beiden Elemente der Plakette gegeneinander gedrückt, um zwischen den beiden Elementen den Abschnitt des Nachrüst-Flächenelements und den Abschnitt des Flächenelements der Überdachungsvorrichtung bzw. die beiden aufeinander liegenden Lagen dieser Flächenelemente zu verbinden. Zum Beispiel, wenn das Nachrüst-Flächenelement mit dem Flächenelement der Überdachungsvorrichtung mit Hilfe einer Plakette verbunden ist, sind die beiden Elemente der Plakette gegeneinander gedrückt und miteinander fest verbunden, zum Beispiel lösbar miteinander fest verbunden.

Zum Beispiel, wenn das Nachrüst-Flächenelement mit dem Flächenelement der Überdachungsvorrichtung mit Hilfe einer Plakette verbunden ist, sind die beiden Elemente der Plakette gegenseitig eingerastet, gegenseitig verrastet, gegenseitig eingehakt oder miteinander verschlossen oder anderweitig aneinander fixiert.

Die Abschnitte des Nachrüst- Flächenelements und des Flächenelements der Überdachungsvorrichtung können zusätzlich oder ausschließlich mit Schraubverschlussmittel miteinander verbunden werden.

Die Abschnitte des Nachrüst-Flächenelements und des Flächenelements der Überdachungsvorrichtung können zusätzlich oder ausschließlich mit Schnellverschlussmittel wie z. B. Druckverschlussmittel, Reißverschlussmittel, Klettverschlussmittel miteinander verbunden werden.

Die Abschnitte des Nachrüst- Flächenelements und des Flächenelements der Überdachungsvorrichtung können zusätzlich oder ausschließlich mit Klebemittel miteinander verbunden werden.

Die Abschnitte des Nachrüst-Flächenelements und des Flächenelements der Überdachungsvorrichtung können zusätzlich oder ausschließlich durch Annähen miteinander verbunden werden.

Die Abschnitte des Nachrüst-Flächenelements und des Flächenelements der Überdachungsvorrichtung können zusätzlich oder ausschließlich durch Kunststoffschweißen miteinander verbunden werden.

Es wird eine Überdachungsvorrichtung zur Überdachung eines Bereichs im Freien, wie Anbauflächen für Kultur- oder Nutzpflanzen oder von anderen wirtschaftlich genutzten Flächen vorgeschlagen, umfassend ein Flächenelement und eine Stützanordnung mit Stützen, wobei das von der Stützanordnung getragene Flächenelement zur Bildung eines flächigen Schutzdaches oberhalb des Bereichs dient, wobei sich ein Abschnitt des Flächenelements entlang eines Firstbereichs des Schutzdaches erstreckt, mit einer wie oben beschriebenen Vorrichtung für eine solche Überdachungsvorrichtung.

Insbesondere wird eine Überdachungsvorrichtung zur Überdachung eines Bereichs im Freien, wie Anbauflächen für Kultur- oder Nutzpflanzen oder von anderen wirtschaftlich genutzten Flächen vorgeschlagen, umfassend ein Flächenelement und eine Stützanordnung mit Stützen, wobei die Stützanordnung an einer Bodenfläche des Bereichs verankerbar ist, und wobei das von der Stützanordnung getragene Flächenelement zur Bildung eines flächigen Schutzdaches oberhalb des Bereichs dient, wobei sich ein Abschnitt des Flächenelements entlang eines Firstbereichs des Schutzdaches erstreckt, mit einer wie oben beschriebenen Vorrichtung für eine solche Überdachungsvorrichtung.

Ein anderer Aspekt der Erfindung geht von einer Vorrichtung zur Überdachung eines Bereichs im Freien aus, wie Anbauflächen für Kultur- oder Nutzpflanzen oder von anderen wirtschaftlich genutzten Flächen, umfassend ein Flächenelement und eine Stützanordnung mit Stützen, wobei die Stützanordnung an einer Bodenfläche des Bereichs verankerbar ist, und wobei das von der Stützanordnung getragene Flächenelement zur Bildung eines flächigen Schutzdaches oberhalb des Bereichs dient, wobei sich ein Abschnitt des Flächenelements entlang eines Firstbereichs des Schutzdaches erstreckt.

Beispielsweise ist ein Solarzel_en-Modul vorgesehen, das mit einem ersten Bereich des Flächenelements unlösbar verbunden ist, so dass bei Lichteinstrahlung auf das Solarzellen-Modul Lichtenergie in elektrische Energie umwandelbar ist, wobei der erste Bereich des Flächenelements im Firstbereich befestigt ist und wobei der erste Bereich des Flächenelements zusätzlich zur Befestigung im Firstbereich mit einem zweiten Bereich des Flächenelements verbunden ist. Zum Beispiel ist die unlösbare Verbindung durch Kleben, Kunststoff-Schweißen und/oder Annähen eingerichtet. Damit lässt sich der gerollte, gefaltete oder geraffte Bereich des Flächenelements sicher unterhalb des oberen Bereichs des Flächenelements, der mit dem Solarmodul versehen ist, von diesem überdeckt, befestigen und halten. Der gerollte, gefaltete oder geraffte Bereich des Flächenelements ist damit zum Beispiel im Winter geschützt vor Wettereinflüssen. Ein Verbringen des betreffenden Flächenelements z. B. in eine Lagerstätte ist nicht erforderlich, was wirtschaftlich und technisch vorteilhaft ist. Im nächsten Frühjahr kann der betreffende Bereich schnell und unkompliziert wieder zum Schutzdach aufgespannt werden.

Beispielhaft ist der erste Bereich des Flächenelements mit einem Firstelement des Firstbereichs lösbar verbunden. Beispielsweise eignen sich für die lösbare Verbindung hierfür Klammer-Verbinder wie zum Beispiel Plaketten für Obstbau-Überdachungen, Kabelbinder, Spann- oder Expanderbänder oder dergleichen.

Es ist überdies beispielhaft, dass bezogen auf eine Gesamtfläche des Solarzellen-Moduls, eine Teilfläche des Solarzellen-Moduls zwischen 5 % und 50 % mit den Klettverschluss-Mitteln bedeckt ist. Dabei ist ein jeweiliges Band gemeint. Damit wird eine stabile und sichere lösbare Verbindung des Solarzellen-Moduls am Flächenelement erreicht. Das Flächenelement weist z. B. in entsprechender Flächengröße die anderen Bänder der Klettverschluss-Mittel auf.

### Figurenbeschreibung

Weitere Merkmale und Vorteile der Erfindung sind anhand von stark schematisiert dargestellten Ausführungsbeispielen näher erläutert. Im Einzelnen zeigt:
- Fig. 1: eine horizontale Frontansicht einer Vorrichtung zur Überdachung,

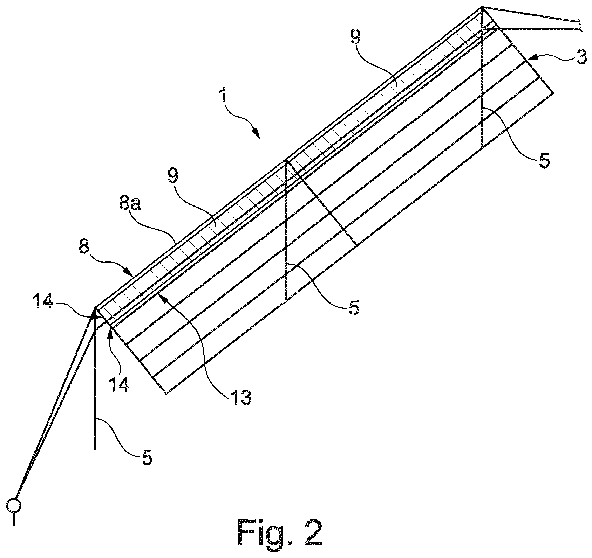

- Fig. 2: eine perspektivische Ansicht schräg von oben auf einen Ausschnitt einer Vorrichtung zur Überdachung,
- Fig. 3: einen vergrößerten Ausschnitt eines Schutzdaches der Vorrichtung gemäß Fig. 2,
- Fig. 3a: ein Querschnitt gemäß dem Schnitt A-A in Fig. 3 durch einen Ausschnitt des Schutzdaches,
- Fig. 3b: ein Querschnitt gemäß dem Schnitt B-B in Fig. 3 durch einen Ausschnitt des Schutzdaches,
- Fig. 4: in der Ansicht gemäß Fig. 3 einen Ausschnitt eines Schutzdaches einer zur Vorrichtung gemäß Fig. 2 alternativen Vorrichtung zur Überdachung, wobei kein Solarzellen-Modul vorhanden ist,
- Fig. 5: ein zum Ausschnitt gemäß Fig. 4 passendes Solarzellen-Modul in Unteransicht,
- Fig. 6: einen Ausschnitt einer Vorrichtung zur Überdachung mit teils zusammengefaltetem Schutzdach in perspektivischer Ansicht schräg von oben,
- Fig. 7: in horizontaler Frontansicht ein aufgespanntes Schutzdach,
- Fig. 8: das Schutzdach gemäß Fig. 7 in horizontaler Frontansicht in einem zusammengefalteten und gehaltenen Zustand eines Teils des Schutzdaches,
- Fig. 9: in horizontaler Frontansicht ein aufgespanntes Schutzdach einer Überdachungsvorrichtung mit einer Nachrüstanordnung und
- Fig. 10: in horizontaler Frontansicht eine Anordnung eines aufgespannten Schutzdaches einer Überdachungsvorrichtung mit einer alternativen Nachrüstanordnung.

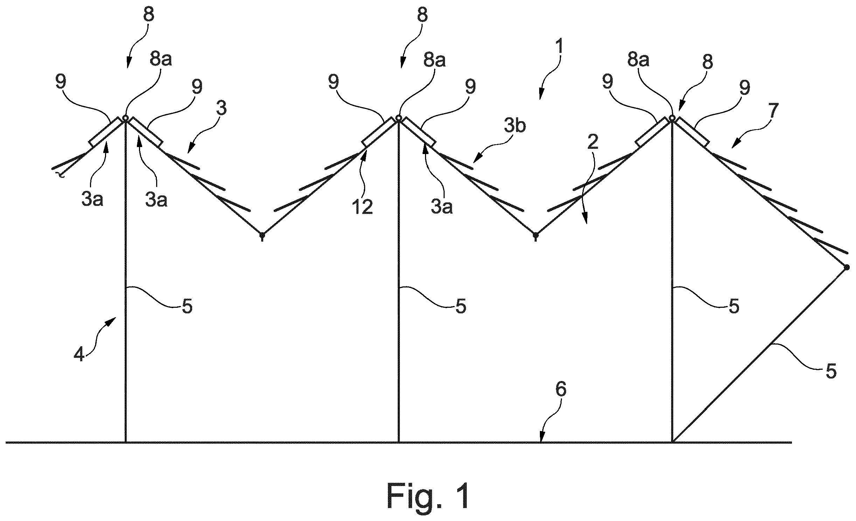

Fig. 1 zeigt eine Vorrichtung 1 zur Überdachung eines Bereichs 2 im Freien, wie z. B. Anbauflächen für Kultur- oder Nutzpflanzen oder von anderen wirtschaftlich genutzten Flächen, umfassend ein Flächenelement 3 und eine Stützanordnung 4 mit Stützen 5. Zum Beispiel sind die Stützen 5 als Gerüststangen ausgebildet.

Die Stützanordnung 4 ist an einer Bodenfläche 6 des Bereichs 2 verankert bzw. verankerbar. Das von der Stützanordnung 4 getragene Flächenelement 3 dient zur Bildung eines flächigen Schutzdaches 7 oberhalb des Bereichs 2. Ein Flächenelement-Abschnitt 3a des Flächenelements 3 erstreckt sich entlang eines Firstbereichs 8 des Schutzdaches 7. Der Firstbereich 8 weist z. B. ein Firstelement 8a auf, zum Beispiel einen gespannten Firstdraht.

Zum Beispiel weist das mehrfach satteldachförmige Schutzdach 7 mehrere parallele Firstbereiche 8 auf. Beispielsweise erstreckt sich ein Randabschnitt des Flächenelements 3 entlang eines jeweiligen Firstbereichs 8. Jeder Firstbereich 8 ist im gezeigten Beispiel in einer satteldachförmigen Gestaltung des Schutzdaches 7 winklig mit aufeinander zulaufenden Teilbereichen ausgebildet.

Bei einer nicht gezeigten alternativen nach außen gewölbten bzw. nach oben gebogenen Gestaltung des Schutzdaches ist der Firstbereich beidseitig gebogen zu einem höchsten gelegenen Teil des Schutzdaches.

Bei der Vorrichtung 1 sind mehrere Firstbereiche 8 mit jeweils zwei Solarzellen-Modulen 9 vorgesehen.

Ein jeweiliges Solarzellen-Modul 9 ist mit dem Flächenelement 3 verbunden, so dass bei Lichteinstrahlung auf das Solarzellen-Modul 9 Lichtenergie in elektrische Energie umwandelbar ist.

Beispielsweise sind Schnellverschlussmittel 10 umfassend Reißverschlussmittel 11 mit einer Reißverschluss-Einheit 12 vorgesehen, um mit den Reißverschlussmitteln 11 ein Solarzellen-Modul 9 an dem Flächenelement 3 lösbar anzuordnen.

Beispielsweise sind Schnellverschlussmittel 10 umfassend Klettverschlussmittel 13 mit einer Klettverschluss-Einheit 14 vorgesehen sind, um mit den Klettverschlussmitteln 13 ein Solarzellen-Modul 9 an dem Flächenelement 3 lösbar anzuordnen.

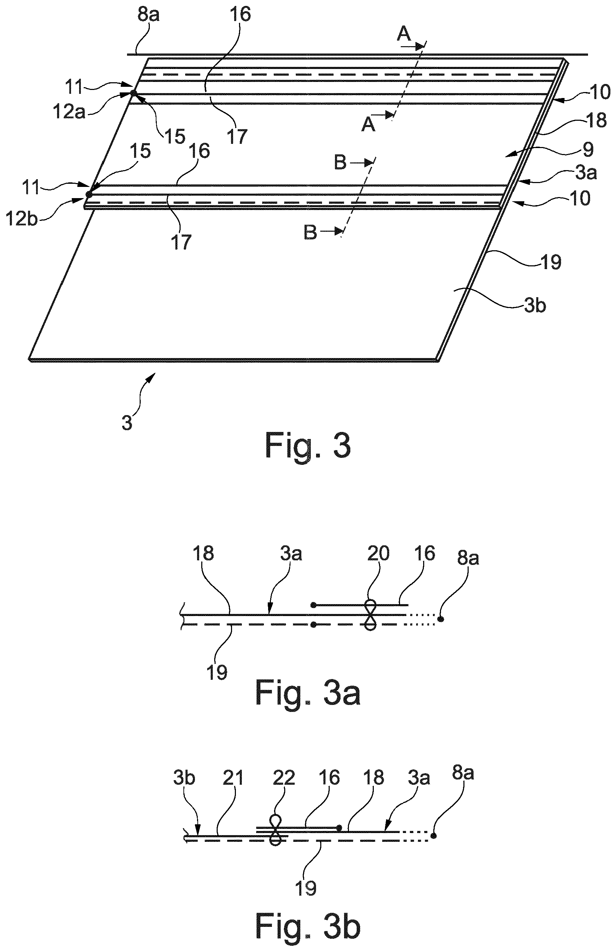

Die Reißverschluss-Einheit 12, zum Beispiel eine erste Reißverschluss-Einheit 12a und eine zweite Reißverschluss-Einheit 12b, weist einen Schieber 15 und zwei längliche miteinander lösbar verhakbare Seitenteile 16, 17 auf (s. Fig. 3).

Die Anbringung eines zum Beispiel Seitenteils 16 durch Annähen an dem Flächenelement 3 verdeutlichen die Figuren 3a und 3b.

An einem oberen dem Firstelement 8a zugewandten Längsrand des als Folienstreifen ausgebildeten ersten Flächenelement-Abschnitts 3a bzw. des Abschnitts 3a des Flächenelements 3, z. B. gemäß dem Schnitt A-A in Fig. 3, ist ein Seitenteil 16 oben auf einer streifenförmigen Folie 18 des Abschnitts 3a aufliegend fixiert. Das Seitenteil 16 ist mit dem Flächenelement-Abschnitt 3a und mit der Folie 18 und einem darunter vorhandenen Netzelement 19 vernäht mit einen Nähfaden 20. Der Nähfaden 20 verbindet durchgreifend das Seitenteil 16 der Reißverschluss-Einheit 12a, die Folie 18 des Abschnitts 3a und das Netzelement 19 (s. Fig. 3a). Ein zur Reißverschluss-Einheit 12a gehöriges Seitenteil 17 ist am dazugehörigen Solarzellen-Modul 9 z. B. angenäht oder angeklebt.

An einem unteren dem Firstelement 8a abgewandten Längsrand des als Folienstreifen ausgebildeten ersten Flächenelement-Abschnitts 3a des Flächenelements 3, z. B. gemäß dem Schnitt B-B in Fig. 3, ist ein Seitenteil 16 fixiert. Das Seitenteil 16 ist oberhalb der Folie 18 des Flächenelement-Abschnitts 3a vorhanden und mit einer Folie 21 des streifenförmigen zweiten Flächenelement-Abschnitts 3b und dem durchgehend vorhandenen untersten Netzelement 19 vernäht mit einem Nähfaden 22. Die Naht bzw. Vernähung verbindet einen Rand der oberen Folie 18 mit der unteren Folie 21, wobei die Ränder der Folien 18 und 21 sich im Nahtbereich überlappen. Der Nähfaden 22 verbindet durchgreifend das Seitenteil 16 der Reißverschluss-Einheit 12, die Folie 18 des Abschnitts 3a, die Folie 21 des Flächenelement-Abschnitts 3b und das Netzelement 19 (s. Fig. 3b). Ein zur Reißverschluss-Einheit 12b gehöriges Seitenteil 17 ist am dazugehörigen Solarzellen-Modul 9 z. B. angenäht oder angeklebt.

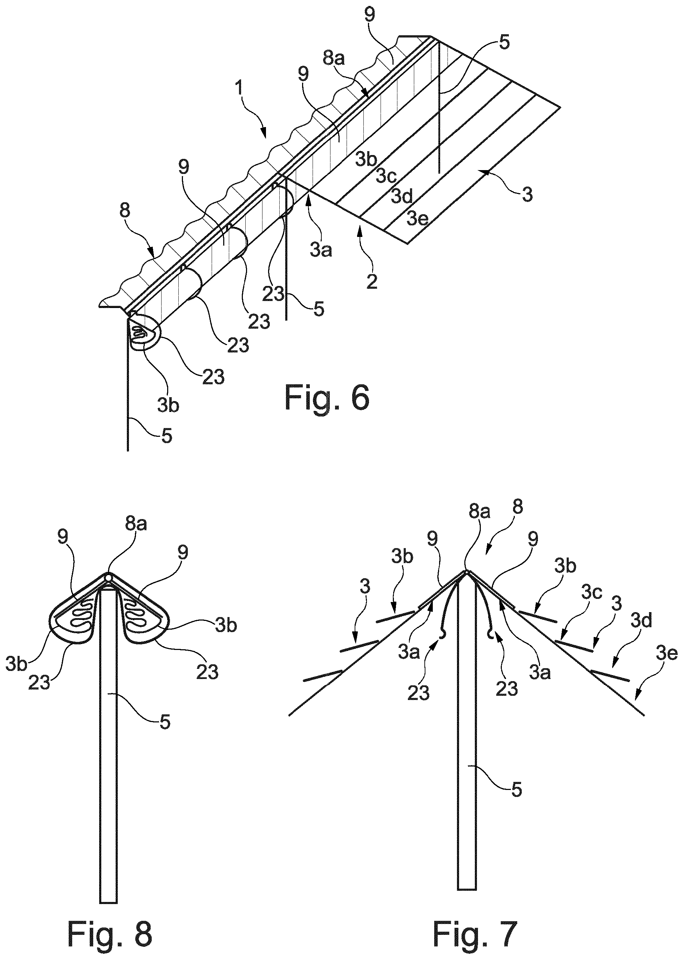

Fig. 6 zeigt perspektivisch und ausschnittsweise eine Vorrichtung 1.

Über die Länge entlang eines Firstelements 8a weist die Vorrichtung 1 durchgehend über die gesamte Länge und beidseitig des Firstelements 8a den Flächenelement-Abschnitt 3a mit oberhalb vorhandenem Solarzellen-Modul 9 auf.

Über eine Teillänge des restlichen Flächenelements bilden der Flächenelement-Abschnitt 3b und weitere streifenförmige Flächenelement-Abschnitte 3c, 3d und 3e einen Bereich des Flächenelements 3 in einer Lagerstellung gemäß Fig. 8 bzw. vordere Teil in Fig. 6. In der Lagerstellung sind die Flächenelement-Abschnitte 3b, 3c, 3d und 3e gehalten und zusammengefaltet oder zusammengelegt und bilden einen geschlossenen Teil des Schutzdaches 7, zum Beispiel zur Überwinterung. Der geschlossene Teil des Schutzdaches 7 ist und vom Volumen reduziert und befindet sich gehalten und geschützt unterhalb des Flächenelement-Abschnitts 3a mit dem Solarzellen-Modul 9 (s. Fig. 8, vordere Teil in Fig. 6).

Ein anderer Teil des Schutzdaches 7, umfassend den aufgespannten Flächenelement-Abschnitt 3a mit Solarzellen-Modul 9 und einen Bereich mit den ausgebreiteten weiteren Flächenelement-Abschnitte 3b, 3c, 3d und 3e, ist geöffnet zur Überdachung des Bereichs 2. In Fig. 7 sind einseitig freie Folienstreifen der Folienelement-Abschnitte 3b-3e nach oben zum Netzelement 19 ausgelenkt dargestellt, z. B. durch Wind bewirkt.

Sämtliche Teile des gezeigten Schutzdaches 7 weisen die flächigen räumlich schräg ausgerichteten Solarzellen-Module 9 im Betrieb zur Energieerzeugung auf.

Es sind Haltemittel 23 vorhanden, den Bereich des Flächenelements 3, umfassend Flächenelement-Abschnitte 3b, 3c, 3d und 3e, in der Lagerstellung umschlingend zu halten, um diesen Bereich des Flächenelements 3 in einer nicht abdeckenden Anordnung temporär geschützt anzuordnen. Die Bereiche mit den Flächenelement-Abschnitten 3b-3e samt Teil des Netzelements 19 in der Lagerstellung sind nach oben in Richtung des Firstbereichs 8 zusammengefaltet oder zusammengerollt und unterhalb des mit dem Solarzellen-Modul 9 verbundenen Flächenelement-Abschnitts 3a gehalten.

Die Haltemittel 23 umfassen beispielsweise ein Überwinterungsband wie z. B. ein elastisches Band mit endseitigen Einhakmitteln wie einem starren Haken. Beispielseise hängen die Haltemittel 23 im nicht genutzten Zustand gemäß Fig. 7 locker nach unten. Die Haltemittel 23 sind beispielsweise an der Stütze 5 und/oder dem Firstelement 8a befestigt und z. B. einhakbar.

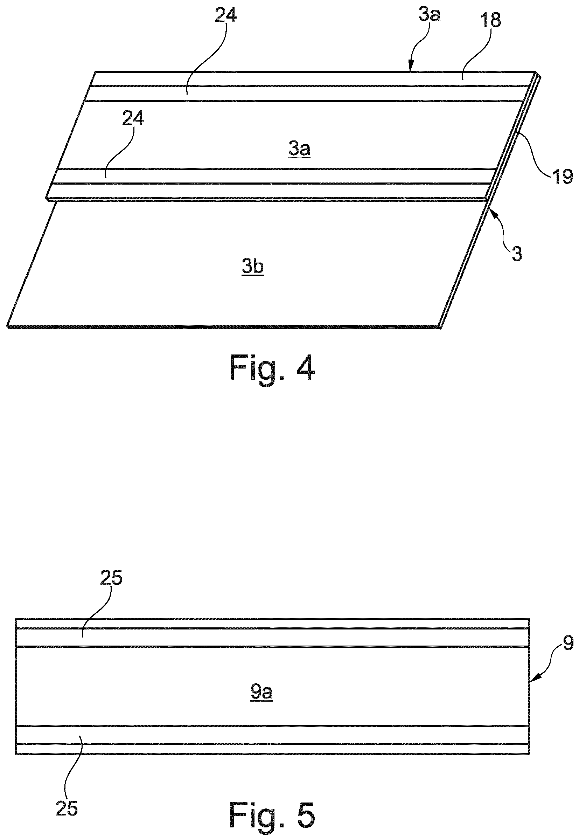

Beispielsweise weist gemäß der Figuren 4 und 5 eine Klettverschluss-Einheit 14 zwei flache flexible Klettstreifen auf, umfassend einen ersten Klettstreifen 24 und einen zweiten Klettstreifen 25. Die Klettstreifen 24 und 25 sind reversibel miteinander lösbar verhakbar.

Zum Beispiel ist der erste Klettstreifen 24 mit flexiblen Schlaufen versehen z. B. ein Flauschband. Z. B. weist der zweite Klettstreifen 25 flexible Widerhäkchen auf, z. B. ein Hakenband.

Beispielsweise sind an dem ersten Flächenelement-Abschnitt 3a gemäß Fig. 4, z. B. auf der Folie 18, ein oberer erster Klettstreifen 24 und ein unterer erster Klettstreifen 24 parallel versetzt z. B angenäht, vernäht, verklebt, verschweißt oder einstückig am Flächenelement angebracht.

Bezogen auf die Klettstreifen 24 am Flächenelement-Abschnitt 3a sind in einem entsprechenden Abstand auf einer Unterseite 9a des Solarzellen-Moduls 9 gemäß Fig. 5, z. B. auf einem unterseitigen Trägermaterial, ein oberer zweiter Klettstreifen 25 und ein unterer zweiter Klettstreifen 25 parallel versetzt z. B angenäht, vernäht, verklebt, verschweißt oder einstückig auf der Unterseite 9a angebracht.

Das Solarzellen-Modul 9 ist damit reversibel lösbar mit der Unterseite 9a ausgerichtet zur Oberseite des Flächenelement-Abschnitts 3a bzw. auf der Folie 18 andrückend aufbringbar und fixiert gehalten. Jeder Klettstreifen 24 kommt mit einem dazugehörigen Klettstreifen 25 in verhakenden Andrück-Kontakt.

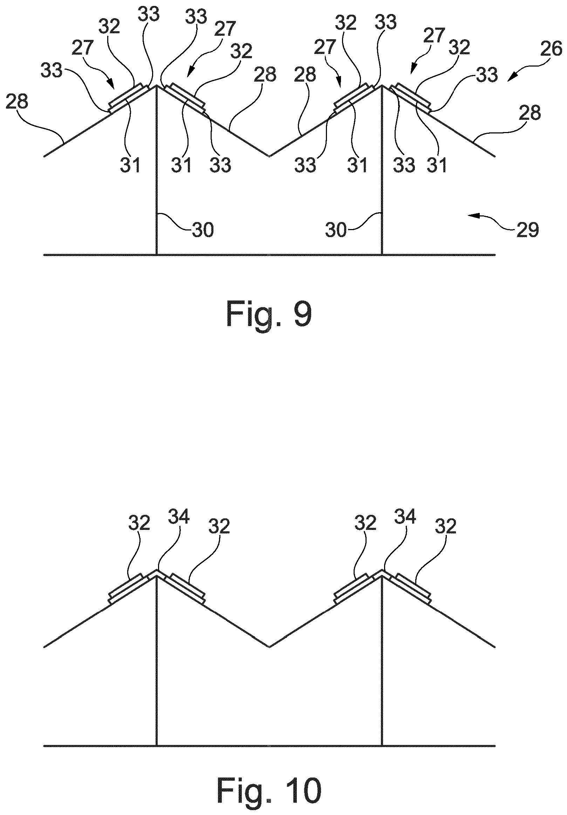

Fig. 9 zeigt stark schematisch eine Überdachungsvorrichtung 26 zur Überdachung eines Bereichs im Freien mit vier identischen Vorrichtungen 27, die als Nachrüstanordnung ausgebildet sind. Demgemäß weist die zum Beispiel als bestehende Überdachungsvorrichtung erstellte Überdachungsvorrichtung 26 ein Flächenelement 28 und eine Stützanordnung 29 mit Stützen 30 auf. Das von der Stützanordnung 29 getragene Flächenelement 28 bildet ein Schutzdach. Das Flächenelement 28 bildet vier jeweils schräg ausgerichtete Teilbereiche des Schutzdaches.

Die Vorrichtungen 27 weisen jeweils ein Nachrüst-Flächenelement 31 mit einem Solarzellen-Modul 32 auf. Die Vorrichtungen sind jeweils beidseitig entlang von zwei Firstbereichen des Schutzdaches vorhanden.

Das jeweilige Solarzellen-Modul ist z. B. lösbar an dem Nachrüst-Flächenelement 31 befestigt, zum Beispiel mit Reißverschluss- und/oder Klettverschlussmittel.

Das Nachrüst-Flächenelement 31 ist zum Beispiel nachträglich an dem Schutzdach bzw. dem Flächenelement 28 zum Beispiel festgeklemmt z. B. mit Plaketten 33 angebracht.

Die Anordnung gemäß Fig. 10 unterscheidet sich von der Anordnung gemäß Fig. 9 allein dadurch, dass zwei Reihen von Solarzellen-Modulen 32, die beidseitig zu einer Firstlinie eines Firstbereichs vorhanden sind, an einem gemeinsamen Nachrüst-Flächenelement 34 angebracht sind, zum Beispiel mit Reißverschluss- und/oder Klettverschlussmittel.

Das jeweils an den beiden gezeigten Firstbereichen durchgehend ausgebildete Nachrüst-Flächenelement 34, überdeckt jeweils die dazugehörige Firstlinie.

### Bezugszeichenliste

- 1: Vorrichtung
- 2: Bereich
- 3: Flächenelement
- 3a-3e: Flächenelement-Abschnitt
- 4: Stützanordnung
- 5: Stütze
- 6: Bodenfläche
- 7: Schutzdach
- 8: Firstbereich
- 8a: Firstelement
- 9: Solarzellen-Modul
- 9a: Unterseite
- 10: Schnellverschlussmittel
- 11: Reißverschlussmittel
- 12: Reißverschluss-Einheit
- 12a, 12b: Reißverschluss-Einheit
- 13: Klettverschlussmittel
- 14: Klettverschluss-Einheit
- 15: Schieber
- 16: Seitenteil
- 17: Seitenteil
- 18: Folie
- 19: Netzelement
- 20: Nähfaden
- 21: Folie
- 22: Nähfaden
- 23: Haltemittel
- 24: Klettstreifen
- 25: Klettstreifen
- 26: Überdachungsvorrichtung
- 27: Vorrichtung
- 28: Flächenelement
- 29: Stützanordnung
- 30: Stütze
- 31: Nachrüst-Flächenelement
- 32: Solarzellen-Modul
- 33: Plakette
- 34: Nachrüst-Flächenelement

## Patentansprüche

1. Landwirtschafts-Überdachungssystem (1) wie ein Kulturpflanzen-, Obst- und/oder Gemüse-Überdachungssystem zur Überdachung eines Bereichs (2) im Freien, wie Anbauflächen für Kultur- oder Nutzpflanzen oder von anderen wirtschaftlich genutzten Flächen, umfassend ein Flächenelement (3) und eine Stützanordnung (4)mit Stützen (5), wobei die Stützanordnung (4) an einer Bodenfläche (6) des Bereichs (2) verankerbar ist, und wobei das von der Stützanordnung (4) getragene Flächenelement (3) zur Bildung eines flächigen Schutzdaches (7) oberhalb des Bereichs (2) dient, wobei sich ein Abschnitt des Flächenelements (3) entlang eines Firstbereichs (8) des Schutzdaches (7) erstreckt, wobei sich die voneinander beabstandeten Stützen (5) in vertikaler Richtung von unten von der Bodenfläche (6) bis in den Firstbereich (8) erstrecken, wobei im Firstbereich (8) ein quer zur Vertikalen langgestrecktes Firstelement (8a) der Stützanordnung (4) vertikal zur Bodenfläche (6) versetzt im Firstbereich (8) vorhanden ist, wobei ein Solarzellen-Modul (9) vorgesehen ist, das mit dem Flächenelement (3) verbunden ist, so dass bei Lichteinstrahlung auf das Solarzellen-Modul (9) Lichtenergie in elektrische Energie umwandelbar ist, wobei das Solarzellen-Modul (9) in einem Bereich des Landwirtschafts-Überdachungssystems (1) vorhanden ist, welcher benachbart zu dem Firstelement (8a) des Firstbereichs (8) ist, wobei das Flächenelement (3) einen ersten Flächenelement-Abschnitt (3a) aufweist, der benachbart zum Firstelement (8a) vorhanden ist und sich in Längsrichtung des Firstelements (8a) erstreckt, wobei das Flächenelement (3) einen zweiten Flächenelement-Abschnitt (3b-3e) umfasst, der benachbart zum ersten Flächenelement-Abschnitt (3a) vorhanden ist, auf einer dem Firstelement (8a) abgewandten Seite des ersten Flächenelement-Abschnitts (3a), wobei das Solarzellen-Modul (9) auf einer Außenseite des ersten Flächenelement-Abschnitts (3a) vorhanden ist, wobei das Solarzellen-Modul (9) in einem parallel zum Firstelement (8a) verlaufenden Streifen des Flächenelements (3) benachbart zum Firstelement (8a) vorhanden ist, wobei der zweite Flächenelement-Abschnitt (3b-3e) eine mehrfache Breite der Breite des ersten Flächenelement-Abschnitts (3a) aufweist, **dadurch gekennzeichnet, dass** das Flächenelement (3) flexibel zum Beispiel auf- und abrollbar ist, wobei Schnellverschlussmittel (10) umfassend Reißverschlussmittel (11) mit einer Reißverschluss-Einheit (12) vorgesehen sind, um mit den Reißverschlussmitteln (11) ein Solarzellen-Modul (9) an dem Flächenelement (3) lösbar anzuordnen.

2. Landwirtschafts-Überdachungssystem (1) wie ein Kulturpflanzen-, Obst- und/oder Gemüse-Überdachungssystem nach dem Oberbegriff des Anspruchs 1, insbesondere nach Anspruch 1, wobei ein Solarzellen-Modul (9) vorgesehen ist, das mit dem Flächenelement (3) verbunden ist, so dass bei Lichteinstrahlung auf das Solarzellen-Modul (9) Lichtenergie in elektrische Energie umwandelbar ist, , wobei das Solarzellen-Modul (9) in einem Bereich des Landwirtschafts-Überdachungssystems (1) vorhanden ist, welcher benachbart zu dem Firstelement (8a) des Firstbereichs (8) ist, wobei das Flächenelement (3) einen ersten Flächenelement-Abschnitt (3a) aufweist, der benachbart zum Firstelement (8a) vorhanden ist und sich in Längsrichtung des Firstelements (8a) erstreckt, wobei das Flächenelement (3) einen zweiten Flächenelement-Abschnitt (3b-3e) umfasst, der benachbart zum ersten Flächenelement-Abschnitt (3a) vorhanden ist, auf einer dem Firstelement (8a) abgewandten Seite des ersten Flächenelement-Abschnitts (3a), wobei das Solarzellen-Modul (9) auf einer Außenseite des ersten Flächenelement-Abschnitts (3a) vorhanden ist, wobei das Solarzellen-Modul (9) in einem parallel zum Firstelement (8a) verlaufenden Streifen des Flächenelements (3) benachbart zum Firstelement (8a) vorhanden ist, wobei der zweite Flächenelement-Abschnitt (3b-3e) eine mehrfache Breite der Breite des ersten Flächenelement-Abschnitts (3a) beträgt, **dadurch gekennzeichnet, dass** das Flächenelement (3) flexibel zum Beispiel auf- und abrollbar ist, wobei Schnellverschlussmittel (10) umfassend Klettverschlussmittel (13) mit einer Klettverschluss-Einheit (14) vorgesehen sind, um mit den Klettverschlussmitteln (13) ein Solarzellen-Modul (9) an dem Flächenelement (3) lösbar anzuordnen.

3. Landwirtschafts-Überdachungssystem (1) wie ein Kulturpflanzen-, Obst- und/oder Gemüse-Überdachungssystem nach Anspruch 1 oder nach Anspruch 2, **dadurch gekennzeichnet, dass** das Solarzellen-Modul (9) flexibel ausgebildet ist.

4. Landwirtschafts-Überdachungssystem (1) wie ein Kulturpflanzen-, Obst- und/oder Gemüse-Überdachungssystem nach einem der vorhergehenden Ansprüche, **dadurch gekennzeichnet, dass** das Solarzellen-Modul (9) über einen Randbereich des Solarzellen-Moduls (9) mittels den Reißverschlussmitteln (11) mit dem Flächenelement (3) lösbar verbunden ist.

5. Landwirtschafts-Überdachungssystem (1) wie ein Kulturpflanzen-, Obst- und/oder Gemüse-Überdachungssystem nach einem der vorhergehenden Ansprüche, **dadurch gekennzeichnet, dass** eine Reißverschluss-Einheit (12) einen Schieber (15) und zwei längliche miteinander lösbar verhakbare Seitenteile (16, 17) aufweist, wobei ein Seitenteil (17) der Reißverschluss-Einheit (12) an dem Solar-Modul (9) vorhanden ist und ein anderes Seitenteil (16) der dazugehörigen Reißverschluss-Einheit (12) an dem Flächenelement (3) vorhanden ist.

6. Landwirtschafts-Überdachungssystem (1) wie ein Kulturpflanzen-, Obst- und/oder Gemüse-Überdachungssystem nach einem der vorhergehenden Ansprüche, **dadurch gekennzeichnet, dass** die Reißverschlussmittel (11) zwei Reißverschluss-Einheiten (12a, 12b) aufweisen, die jeweils unabhängig voneinander funktionieren für eine lösbare Anordnung des Solarzellen-Moduls (9) an dem Flächenelement (3).

7. Landwirtschafts-Überdachungssystem (1) wie ein Kulturpflanzen-, Obst- und/oder Gemüse-Überdachungssystem nach einem der vorhergehenden Ansprüche, **dadurch gekennzeichnet, dass** zwei Reißverschluss-Einheiten (12a, 12b) derart vorgesehen sind, dass eine lösbare Anordnung von gegenüberliegenden Rändern des Solarzellen-Moduls (9) an dem Flächenelement (3) eingerichtet ist.

8. Landwirtschafts-Überdachungssystem (1) wie ein Kulturpflanzen-, Obst- und/oder Gemüse-Überdachungssystem nach einem der vorhergehenden Ansprüche, **dadurch gekennzeichnet, dass** eine erste Reißverschluss-Einheit (12a) und eine zweite Reißverschluss-Einheit (12b) mit jeweils zwei Seitenteilen (16, 17) und einem Schieber (15) vorgesehen sind, wobei an dem Solarzellen-Modul (9) entlang eines ersten Längsrandes des Solarzellen-Moduls (9) ein Seitenteil (17) der ersten Reißverschluss-Einheit (12a) vorhanden ist und wobei an dem Solarzellen-Modul (9) entlang eines zweiten Längsrandes des Solarzellen-Moduls (9) ein Seitenteil (17) der zweiten Reißverschluss-Einheit (12b) vorhanden ist.

9. Landwirtschafts-Überdachungssystem (1) wie ein Kulturpflanzen-, Obst- und/oder Gemüse-Überdachungssystem nach einem der vorhergehenden Ansprüche, **dadurch gekennzeichnet, dass** die Reißverschlussmittel (11) eine erste Reißverschluss-Einheit (12a) und eine zweite Reißverschluss-Einheit (12b) mit jeweils zwei Seitenteilen (16, 17) umfassen, wobei an dem Flächenelement (3) ein Seitenteil (16) der ersten Reißverschluss-Einheit (12a) vorhanden ist und wobei an dem Flächenelement (3) beabstandet zu dem Seitenteil (16) der ersten Reißverschluss-Einheit (12a) ein Seitenteil (16) der zweiten Reißverschluss-Einheit (12b) vorhanden ist.

10. Landwirtschafts-Überdachungssystem (1) wie ein Kulturpflanzen-, Obst- und/oder Gemüse-Überdachungssystem nach einem der vorhergehenden Ansprüche, **dadurch gekennzeichnet, dass** das Flächenelement (3) eine außenliegende Folie (18, 21) und einen unter der Folie (18, 21) vorhandenen Träger wie ein Netzelement (19) umfasst.

11. Landwirtschafts-Überdachungssystem (1) wie ein Kulturpflanzen-, Obst- und/oder Gemüse-Überdachungssystem nach einem der vorhergehenden Ansprüche, **dadurch gekennzeichnet, dass** das Solarzellen-Modul (9) ein flexibles Trägermaterial umfasst, an dem ein Seitenteil (17) einer Reißverschluss-Einheit (12) angebracht ist.

12. Landwirtschafts-Überdachungssystem (1) wie ein Kulturpflanzen-, Obst- und/oder Gemüse-Überdachungssystem nach einem der vorhergehenden Ansprüche, **dadurch gekennzeichnet, dass** ein Seitenteil (16, 17) einer Reißverschluss-Einheit (12) angenäht vorhanden ist, wie an dem Flächenelement (3) oder an einem Trägermaterial des Solarzellen-Moduls (9).

13. Landwirtschafts-Überdachungssystem (1) wie ein Kulturpflanzen-, Obst- und/oder Gemüse-Überdachungssystem nach einem der vorhergehenden Ansprüche, **dadurch gekennzeichnet, dass** das Solarzellen-Modul (9) eine Elektro-Kontaktstelle umfasst, wobei das Landwirtschafts-Überdachungssystem (1) einen Leitungsabschnitt aufweist, welcher an einem Bauteil (5, 8a) des Landwirtschafts-Überdachungssystems (1) fixiert ist und zur elektrischen Kontaktierung der Elektro-Kontaktstelle des Solarzellen-Moduls (9) vorgesehen ist.

14. Landwirtschafts-Überdachungssystem (26) wie ein Kulturpflanzen-, Obst- und/oder Gemüse-Überdachungssystem, das zur Überdachung eines Bereichs (2) im Freien wie Anbauflächen für Kultur- oder Nutzpflanzen oder für andere wirtschaftlich genutzte Flächen dient, nach einem der vorhergehenden Ansprüche, **dadurch gekennzeichnet, dass** die Vorrichtung ein Solarzellen-Modul (32), das mit einem Nachrüst-Flächenelement (31, 34) verbunden ist, aufweist, und wobei die Vorrichtung als eine Nachrüstanordnung für eine Anbringung der Vorrichtung an dem Landwirtschafts-Überdachungssystem (26) derart ausgebildet ist, dass das Nachrüst-Flächenelement (31, 34) an einem Flächenelement des Landwirtschafts-Überdachungssystems (26) nachträglich anbringbar ist.

15. Landwirtschafts-Überdachungssystem (26) wie ein Kulturpflanzen-, Obst- und/oder Gemüse-Überdachungssystem nach Anspruch 14, **dadurch gekennzeichnet, dass** das Solarzellen-Modul (32) mit dem Nachrüst-Flächenelement (31, 34) lösbar und/oder nicht-lösbar, wie zum Beispiel durch Kleben, Kunststoff-Schweißen und/oder Annähen, verbunden ist.

16. Landwirtschafts-Überdachungssystem (26) wie ein Kulturpflanzen-, Obst- und/oder Gemüse-Überdachungssystem nach einem der Ansprüche 14 und 15, **dadurch gekennzeichnet, dass** das Nachrüst-Flächenelement (31, 34) lösbar und/oder unlösbar, wie zum Beispiel durch Kleben, Kunststoff-Schweißen und/oder Annähen, mit dem Flächenelement der Überdachungsvorrichtung verbindbar ist.

## Claims

1. Agricultural roofing system (1) such as a crop plant, fruit and/or vegetable roofing system for roofing an outdoor region (2), such as cultivation regions for crop plants or useful plants or other economically used regions, comprising a surface element (3) and a support arrangement (4) with supports (5), wherein the support arrangement (4) can be anchored to a ground surface (6) of the region (2), and wherein the surface element (3) carried by the support arrangement (4) serves to form a planar protective roof (7) above the region (2), wherein a portion of the surface element (3) extends along a ridge region (8) of the protective roof (7), wherein the spaced-apart supports (5) extend in the vertical direction from below from the ground surface (6) as far as into the ridge region (8), wherein, in the ridge region (8), there is a ridge element (8a) of the support arrangement (4) which is elongate transversely with respect to the vertical and is offset vertically with respect to the ground surface (6) in the ridge region (8), wherein a solar cell module (9) is provided which is connected to the surface element (3), such that, when light is radiated onto the solar cell module (9), light energy can be converted into electrical energy, wherein the solar cell module (9) is present in a region of the agricultural roofing system (1) which is adjacent to the ridge element (8a) of the ridge region (8), wherein the surface element (3) has a first surface element portion (3a) which is present adjacent to the ridge element (8a) and extends in the longitudinal direction of the ridge element (8a), wherein the surface element (3) comprises a second surface element portion (3b-3e) which is present adjacent to the first surface element portion (3a), on a side of the first surface element portion (3a) facing away from the ridge element (8a), wherein the solar cell module (9) is present on an outer side of the first surface element portion (3a), wherein the solar cell module (9) is present, adjacent to the ridge element (8a), in a strip of the surface element (3) running parallel to the ridge element (8a), wherein the second surface element portion (3b-3e) has a multiple width of the width of the first surface element portion (3a), **characterized in that** the surface element (3) can be flexibly rolled up and unrolled, for example, wherein quick-release closure means (10) comprising zipper means (11) with a zipper unit (12) are provided in order to arrange a solar cell module (9) releasably on the surface element (3) by way of the zipper means (11).

2. Agricultural roofing system (1) such as a crop plant, fruit and/or vegetable roofing system according to the preamble of Claim 1, in particular according to Claim 1, wherein a solar cell module (9) is provided which is connected to the surface element (3), such that, when light is radiated onto the solar cell module (9), light energy can be converted into electrical energy, wherein the solar cell module (9) is present in a region of the agricultural roofing system (1) which is adjacent to the ridge element (8a) of the ridge region (8), wherein the surface element (3) has a first surface element portion (3a) which is present adjacent to the ridge element (8a) and extends in the longitudinal direction of the ridge element (8a), wherein the surface element (3) comprises a second surface element portion (3b-3e), which is present adjacent to the first surface element portion (3a), on a side of the first surface element portion (3a) facing away from the ridge element (8a), wherein the solar cell module (9) is present on an outer side of the first surface element portion (3a), wherein the solar cell module (9) is present, adjacent to the ridge element (8a), in a strip of the surface element (3) running parallel to the ridge element (8a), wherein the second surface element portion (3b-3e) is a multiple width of the width of the first surface element portion (3a), **characterized in that** the surface element (3) can be flexibly rolled up and unrolled, for example, wherein quick-release closure means (10) comprising touch-and-close closure means (13) with a touch-and-close closure unit (14) are provided in order to arrange a solar cell module (9) releasably on the surface element (3) by way of the touch-and-close closure means (13).

3. Agricultural roofing system (1) such as a crop plant, fruit and/or vegetable roofing system according to Claim 1 or according to Claim 2, **characterized in that** the solar cell module (9) is of flexible design.

4. Agricultural roofing system (1) such as a crop plant, fruit and/or vegetable roofing system according to one of the preceding claims, **characterized in that** the solar cell module (9) is connected releasably to the surface element (3) via an edge region of the solar cell module (9) by means of the zipper means (11).

5. Agricultural roofing system (1) such as a crop plant, fruit and/or vegetable roofing system according to one of the preceding claims, **characterized in that** a zipper unit (12) has a slide (15) and two elongate side parts (16, 17) which can be releasably hooked to one another, wherein one side part (17) of the zipper unit (12) is present on the solar module (9) and another side part (16) of the associated zipper unit (12) is present on the surface element (3).

6. Agricultural roofing system (1) such as a crop plant, fruit and/or vegetable roofing system according to one of the preceding claims, **characterized in that** the zipper means (11) have two zipper units (12a, 12b), which each function independently of one another for a releasable arrangement of the solar cell module (9) on the surface element (3).

7. Agricultural roofing system (1) such as a crop plant, fruit and/or vegetable roofing system according to one of the preceding claims, **characterized in that** two zipper units (12a, 12b) are provided in such a way that a releasable arrangement of opposite edges of the solar cell module (9) on the surface element (3) is configured.

8. Agricultural roofing system (1) such as a crop plant, fruit and/or vegetable roofing system according to one of the preceding claims, **characterized in that** a first zipper unit (12a) and a second zipper unit (12b) with in each case two side parts (16, 17) and a slide (15) are provided, wherein one side part (17) of the first zipper unit (12a) is present on the solar cell module (9) along a first longitudinal edge of the solar cell module (9), and wherein one side part (17) of the second zipper unit (12b) is present on the solar cell module (9) along a second longitudinal edge of the solar cell module (9).

9. Agricultural roofing system (1) such as a crop plant, fruit and/or vegetable roofing system according to one of the preceding claims, **characterized in that** the zipper means (11) comprise a first zipper unit (12a) and a second zipper unit (12b) each having two side parts (16, 17), wherein one side part (16) of the first zipper unit (12a) is present on the surface element (3), and wherein one side part (16) of the second zipper unit (12b) is present on the surface element (3) at a distance from the side part (16) of the first zipper unit (12a).

10. Agricultural roofing system (1) such as a crop plant, fruit and/or vegetable roofing system according to one of the preceding claims, **characterized in that** the surface element (3) comprises an outer film (18, 21) and a carrier present under the film (18, 21), such as a mesh element (19).

11. Agricultural roofing system (1) such as a crop plant, fruit and/or vegetable roofing system according to one of the preceding claims, **characterized in that** the solar cell module (9) comprises a flexible carrier material, to which one side part (17) of a zipper unit (12) is attached.

12. Agricultural roofing system (1) such as a crop plant, fruit and/or vegetable roofing system according to one of the preceding claims, **characterized in that** one side part (16, 17) of a zipper unit (12) is present in a sewn-on state, such as on the surface element (3) or on a carrier material of the solar cell module (9).

13. Agricultural roofing system (1) such as a crop plant, fruit and/or vegetable roofing system according to one of the preceding claims, **characterized in that** the solar cell module (9) comprises an electrical contact point, wherein the agricultural roofing system (1) has a line portion which is fixed to a component (5, 8a) of the agricultural roofing system (1) and is provided for electrically contacting the electrical contact point of the solar cell module (9).

14. Agricultural roofing system (26) such as a crop plant, fruit and/or vegetable roofing system, which serves for roofing an outdoor region (2) such as cultivation regions for crop plants or useful plants or for other economically used regions, according to one of the preceding claims, **characterized in that** the device has a solar cell module (32) which is connected to a retrofit surface element (31, 34), and wherein the device is designed as a retrofit arrangement for attachment of the device to the agricultural roofing system (26) in such a way that the retrofit surface element (31, 34) can be retrofitted to a surface element of the agricultural roofing system (26).

15. Agricultural roofing system (26) such as a crop plant, fruit and/or vegetable roofing system according to Claim 14, **characterized in that** the solar cell module (32) is detachably and/or non-detachably connected to the retrofit surface element (31, 34), for example by adhesive bonding, plastic welding and/or sewing.

16. Agricultural roofing system (26) such as a crop plant, fruit and/or vegetable roofing system according to either of Claims 14 or 15, **characterized in that** the retrofit surface element (31, 34) can be detachably and/or non-detachably connected to the surface element of the roofing device, for example by adhesive bonding, plastic welding and/or sewing.

## Revendications

1. Système de toiture agricole (1), tel qu'un système de toiture pour plantes cultivées, fruits et/ou légumes, pour recouvrir une zone (2) en plein air, telle que des surfaces de culture pour plantes cultivées ou plantes utiles ou d'autres surfaces exploitées économiquement, comprenant un élément de surface (3) et un dispositif de support (4) comportant des supports (5), le dispositif de support (4) pouvant être ancré sur une surface de sol (6) de la zone (2), et l'élément de surface (3) porté par le dispositif de support (4) servant à former un toit de protection plan (7) au-dessus de la zone (2), une partie de l'élément de surface (3) s'étendant le long d'une zone de faîte (8) du toit de protection (7), les supports (5) espacés les uns des autres s'étendant dans la direction verticale depuis le bas, de la surface de sol (6) jusque dans la zone de faîte (8), un élément de faîte (8a) du dispositif de support (4) allongé transversalement à la verticale étant présent dans la zone de faîte (8) de manière décalée verticalement par rapport à la surface de sol (6) dans la zone de faîte (8), dans lequel il est prévu un module de cellules solaires (9) qui est relié à l'élément de surface (3) de sorte que, lors d'un rayonnement incident de lumière sur le module de cellules solaires (9), de l'énergie lumineuse puisse être convertie en énergie électrique, le module de cellules solaires (9) étant présent dans une zone du système de toiture agricole (1) qui est adjacente à l'élément de faîte (8a) de la zone de faîte (8), l'élément de surface (3) présentant une première partie d'élément de surface (3a) qui est présente de manière adjacente à l'élément de faîte (8a) et s'étend dans la direction longitudinale de l'élément de faîte (8a), l'élément de surface (3) comprenant une deuxième partie d'élément de surface (3b-3e) qui est présente de manière adjacente à la première partie d'élément de surface (3a), sur un côté de la première partie d'élément de surface (3a) opposé à l'élément de faîte (8a), le module de cellules solaires (9) étant présent sur un côté extérieur de la première partie d'élément de surface (3a), le module de cellules solaires (9) étant présent dans une bande de l'élément de surface (3) s'étendant parallèlement à l'élément de faîte (8a) de manière adjacente à l'élément de faîte (8a), la deuxième partie d'élément de surface (3b-3e) présentant une largeur égale à un multiple de la largeur de la première partie d'élément de surface (3a), **caractérisé en ce que** l'élément de surface (3) est flexible, par exemple peut être enroulé et déroulé, des moyens de fermeture rapide (10) comprenant des moyens de fermeture à glissière (11) comportant une unité de fermeture à glissière (12) étant prévus pour agencer de manière libérable un module de cellules solaires (9) sur l'élément de surface (3) à l'aide des moyens de fermeture à glissière (11).

2. Système de toiture agricole (1), tel qu'un système de toiture pour plantes cultivées, fruits et/ou légumes, selon le préambule de la revendication 1, en particulier selon la revendication 1, dans lequel il est prévu un module de cellules solaires (9) qui est relié à l'élément de surface (3) de sorte que, lors d'un rayonnement incident de lumière sur le module de cellules solaires (9), de l'énergie lumineuse puisse être convertie en énergie électrique, le module de cellules solaires (9) étant présent dans une zone du système de toiture agricole (1) qui est adjacente à l'élément de faîte (8a) de la zone de faîte (8), l'élément de surface (3) présentant une première partie d'élément de surface (3a) qui est présente de manière adjacente à l'élément de faîte (8a) et s'étend dans la direction longitudinale de l'élément de faîte (8a), l'élément de surface (3) comprenant une deuxième partie d'élément de surface (3b-3e) qui est présente de manière adjacente à la première partie d'élément de surface (3a), sur un côté de la première partie d'élément de surface (3a) opposé à l'élément de faîte (8a), le module de cellules solaires (9) étant présent sur un côté extérieur de la première partie d'élément de surface (3a), le module de cellules solaires (9) étant présent dans une bande de l'élément de surface (3) s'étendant parallèlement à l'élément de faîte (8a) de manière adjacente à l'élément de faîte (8a), la deuxième partie d'élément de surface (3b-3e) présentant une largeur égale à un multiple de la largeur de la première partie d'élément de surface (3a), **caractérisé en ce que** l'élément de surface (3) est flexible, par exemple peut être enroulé et déroulé, des moyens de fermeture rapide (10) comprenant des moyens de fermeture auto-agrippante (13) comportant une unité de fermeture auto-agrippante (14) étant prévus pour agencer de manière libérable un module de cellules solaires (9) sur l'élément de surface (3) à l'aide des moyens de fermeture auto-agrippante (13).

3. Système de toiture agricole (1), tel qu'un système de toiture pour plantes cultivées, fruits et/ou légumes, selon la revendication 1 ou selon la revendication 2, **caractérisé en ce que** le module de cellules solaires (9) est réalisé de manière flexible.

4. Système de toiture agricole (1), tel qu'un système de toiture pour plantes cultivées, fruits et/ou légumes, selon l'une des revendications précédentes, **caractérisé en ce que** le module de cellules solaires (9) est relié de manière libérable à l'élément de surface (3) par l'intermédiaire d'une zone de bord du module de cellules solaires (9) au moyen des moyens de fermeture à glissière (11).

5. Système de toiture agricole (1), tel qu'un système de toiture pour plantes cultivées, fruits et/ou légumes, selon l'une des revendications précédentes, **caractérisé en ce qu'**une unité de fermeture à glissière (12) présente un curseur (15) et deux parties latérales (16, 17) allongées pouvant être accrochées l'une à l'autre de manière libérable, une partie latérale (17) de l'unité de fermeture à glissière (12) étant présente sur le module solaire (9) et une autre partie latérale (16) de l'unité de fermeture à glissière (12) associée étant présente sur l'élément de surface (3).

6. Système de toiture agricole (1), tel qu'un système de toiture pour plantes cultivées, fruits et/ou légumes selon l'une des revendications précédentes, **caractérisé en ce que** les moyens de fermeture à glissière (11) présentent deux unités de fermeture à glissière (12a, 12b) qui fonctionnent respectivement de manière indépendante l'une de l'autre pour un agencement libérable du module de cellules solaires (9) sur l'élément de surface (3).

7. Système de toiture agricole (1), tel qu'un système de toiture pour plantes cultivées, fruits et/ou légumes selon l'une des revendications précédentes, **caractérisé en ce qu'**il est prévu deux unités de fermeture à glissière (12a, 12b) de telle sorte qu'un agencement libérable de bords opposés du module de cellules solaires (9) est mis en place sur l'élément de surface (3).

8. Système de toiture agricole (1), tel qu'un système de toiture pour plantes cultivées, fruits et/ou légumes selon l'une des revendications précédentes, **caractérisé en ce qu'**il est prévu une première unité de fermeture à glissière (12a) et une deuxième unité de fermeture à glissière (12b) comportant respectivement deux parties latérales (16, 17) et un curseur (15), une partie latérale (17) de la première unité de fermeture à glissière (12a) étant présente sur le module de cellules solaires (9) le long d'un premier bord longitudinal du module de cellules solaires (9), et une partie latérale (17) de la deuxième unité de fermeture à glissière (12b) étant présente sur le module de cellules solaires (9) le long d'un deuxième bord longitudinal du module de cellules solaires (9).

9. Système de toiture agricole (1), tel qu'un système de toiture pour plantes cultivées, fruits et/ou légumes selon l'une des revendications précédentes, **caractérisé en ce que** les moyens de fermeture à glissière (11) comprennent une première unité de fermeture à glissière (12a) et une deuxième unité de fermeture à glissière (12b) comportant respectivement deux parties latérales (16, 17), une partie latérale (16) de la première unité de fermeture à glissière (12a) étant présente sur l'élément de surface (3), et une partie latérale (16) de la deuxième unité de fermeture à glissière (12b) étant présente sur l'élément de surface (3) à distance de la partie latérale (16) de la première unité de fermeture à glissière (12a).

10. Système de toiture agricole (1), tel qu'un système de toiture pour plantes cultivées, fruits et/ou légumes, selon l'une des revendications précédentes, **caractérisé en ce que** l'élément de surface (3) comprend un film extérieur (18, 21) et un support présent sous le film (18, 21), tel qu'un élément de filet (19).

11. Système de toiture agricole (1), tel qu'un système de toiture pour plantes cultivées, fruits et/ou légumes, selon l'une des revendications précédentes, **caractérisé en ce que** le module de cellules solaires (9) comprend un matériau de support flexible auquel est fixée une partie latérale (17) d'une unité de fermeture à glissière (12).

12. Système de toiture agricole (1), tel qu'un système de toiture pour plantes cultivées, fruits et/ou légumes selon l'une des revendications précédentes, **caractérisé en ce qu'**une partie latérale (16, 17) d'une unité de fermeture à glissière (12) est présente de manière cousue, par exemple sur l'élément de surface (3) ou sur un matériau de support du module de cellules solaires (9).

13. Système de toiture agricole (1), tel qu'un système de toiture pour plantes cultivées, fruits et/ou légumes selon l'une des revendications précédentes, **caractérisé en ce que** le module de cellules solaires (9) comprend un point de contact électrique, le système de toiture agricole (1) présentant un tronçon de ligne qui est fixé à un composant (5, 8a) du système de toiture agricole (1) et est prévu pour la mise en contact électrique avec le point de contact électrique du module de cellules solaires (9).

14. Système de toiture agricole (26), tel qu'un système de toiture pour plantes cultivées, fruits et/ou légumes, servant à recouvrir une zone (2) en plein air telle que des surfaces de culture pour plantes cultivées ou plantes utiles ou pour d'autres surfaces exploitées économiquement, selon l'une des revendications précédentes, **caractérisé en ce que** le dispositif présente un module de cellules solaires (32) qui est relié à un élément de surface de post-équipement (31, 34), et le dispositif étant réalisé sous la forme d'un agencement de post-équipement pour le montage du dispositif sur le système de toiture agricole (26) de telle sorte que l'élément de surface de post-équipement (31, 34) puisse être monté ultérieurement sur un élément de surface du système de toiture agricole (26).

15. Système de toiture agricole (26), tel qu'un système de toiture pour plantes cultivées, fruits et/ou légumes selon la revendication 14, **caractérisé en ce que** le module de cellules solaires (32) est relié à l'élément de surface de post-équipement (31, 34) de manière libérable et/ou non libérable, comme par exemple par collage, soudage de plastique et/ou couture.

16. Système de toiture agricole (26), tel qu'un système de toiture pour plantes cultivées, fruits et/ou légumes selon l'une des revendications 14 et 15, **caractérisé en ce que** l'élément de surface de post-équipement (31, 34) peut être relié de manière libérable et/ou non libérable à l'élément de surface du dispositif de toiture, comme par exemple par collage, soudage de plastique et/ou couture.
